# EUROPÄISCHE PATENTSCHRIFT

(11) **EP 2 371 105 B1**
(45) Veröffentlichungstag und Bekanntmachung des Hinweises auf die Patenterteilung: **14.08.2013**
(21) Anmeldenummer: 09756471.0
(22) Anmeldetag: 16.11.2009
(51) Int. Cl.: H04L 29/06

(54) **VERFAHREN ZUR AUTORISIERUNG EINER TRANSAKTION ÜBER VERSCHIEDENE KANÄLE**
METHOD FOR AUTHORISATION OF A TRANSACTION IMPLYING VARIOUS CHANNELS
PROCEDE D'AUTHORISATION IMPLICANT DES CANAUX DIFFERENTS

(30) Priorität: 01.12.2008 DE 102008059723
(43) Veröffentlichungstag der Anmeldung: 05.10.2011
(60) Teilanmeldung: 13170677.2
(73) Patentinhaber: tagPAY GmbH, 76137 Karlsruhe (DE)
(72) Erfinder: SCHWERDTFEGER, Stefan, 76137 Karlsruhe (DE); DOERFEL, Christian, 71229 Leonberg (DE); LIEBWEIN, Michael, 79793 Hornheim (DE)
(74) Vertreter: Bettinger Schneider Schramm
(86) Internationale Anmeldenummer: PCT/EP2009/065260
(87) Internationale Veröffentlichungsnummer: WO 2010/063563

(56) Entgegenhaltungen:
- EP-A1- 1 865 656
- WO-A1-2005/008608
- WO-A2-03/040863
- US-A1- 2007 107 044
- US-A1- 2007 136 573

## Beschreibung

Die Erfindung betrifft ein Verfahren und eine Einrichtung zur Autorisierung einer Transaktion zwischen einem Dienstanbieter und einem Dienstnutzer.

Die Autorisierung dient dazu, eine oder mehrere Transaktionen, welche eine Prüfung der Berechtigung der Transaktionen voraussetzen, einzuleiten. Verfahren und Einrichtungen zur Autorisierung sind aus dem Stand der Technik bekannt. So sind etwa Verfahren bekannt, mit denen das Laden von digitalen Inhalten auf einer Internet-Seite autorisiert werden kann. Dazu wird beispielsweise auf einer Internet-Seite (welche in einem Internet-Browser eines Computers angezeigt wird) ein Link in Form einer URL (Uniform Resource Locator) zu dem digitalen Inhalt bereitgestellt. Ein Klicken auf diesen Link führt dazu, dass eine weitere Internet-Seite geladen wird, auf welcher verschiedene Transaktionsdaten, Informationen zur Durchführung der Transaktion und ein weiterer Link zum Laden des digitalen Inhaltes angezeigt werden. Die Transaktionsdaten sind hier z.B. eine Transaktions-URL.

Die Transaktions-URL kann dann beispielsweise auf einem WAP-fähigen Mobiltelefon eingegeben werden, um die Autorisierung zu initiieren. Der Dienstleister, welcher die digitalen Inhalte bereitstellt, ermittelt anhand der Transaktions-URL und den Protokolldaten des WAP-Datenkanals, über den die Transaktions-URL aufgerufen wird, eine dem Mobiltelefon zuordenbare Kennung (z.B. MSISDN), um die Transaktion (z.B. Laden der Inhalte) zu autorisieren und um über diese Kennung beispielsweise das Laden der digitale Inhalte abzurechnen, wobei die Abrechnung selbst meist über den Netzbetreiber des Mobilfunk-Teilnehmers (Nutzers) erfolgt.

Auf dem Mobiltelefon erhält der Benutzer anschließend eine mobile Internetseite mit dem Hinweis, dass der digitale Inhalt freigeschaltet sei (und somit die Autorisierung und der Bezahlvorgang erfolgreich waren) und das Laden des digitalen Inhaltes im Internet-Browser des Computers bzw. im WAP-Browser des mobilen Endgerätes (z.B. Mobiltelefon) nun durchgefühlt werden könne. Der Benutzer kann dann auf den weiteren Link klicken, um den digitalen Inhalt einzusehen.

Nachteilig an dem iVerfahren ist zum einen, dass es manuelle Eingaben des Benutzers am Mobiltelefon (Eingabe der Transaktions-URL) erfordert, was fehleranfällig ist (z.B. fehlerhafte Eingabe der Transaktions-URL) und somit zu einer fehlerhaften Abrechung führen kann oder dazu führen kann, dass die angeforderten Inhalte nicht frei geschaltet werden. Es können auch Fehler passieren, welche die vollständige Durchführung des Verfahrens unmöglich machen, z.B. fehlerhafte Eingabe beim Eintippen der URL, beim Eintippen der eigenen MSISDN / Kennung / ID etc. Zum anderen kann nicht gewährleistet werden, dass eine Autorisierung und damit eine Transaktion durchführbar sind. So kann etwa eine Autorisierung nicht durchgeführt werden, wenn der Anbieter der digitalen Inhalte die Kennung des Mobiltelefons aufgrund technischer Unzulänglichkeiten des Mobiltelefons nicht ermitteln kann, z.B. wenn das Mobiltelefon seine Kennung nicht übermitteln kann. Dies ist etwa der Fall, wenn der benutzte Übertragungskanal, z.B. ein WAP-Datenkanal, die Übertragung der Mobiltelefon-Kennung nicht unterstützt. Wenn anstelle des WAP-Datenkanals ein IP-Datenkanal verwendet wird, kann eine Ermittlung der Kennung des mobilen Endgerätes ebenfalls nicht gewährleistet werden.

Ohne Kennung des Mobiltelefons kann in vielen Fällen weder eine Autorisierung noch eine Bezahltransaktion durchgeführt werden. Dem Benutzer wird so der Zugriff auf die digitalen Inhalte aufgrund technischer Einschränkungen vorenthalten.

Aus der US 2007/0107044 A1 ist ein Verfahren zur Durchführung einer Autorisierung einer Internet-Transaktion durch eine Autorisierungseinrichtung bekannt, wobei ein erstes Endgerät und ein zweites Endgerät über ein Kommunikationsnetzwerk mit der Autorisierungseinrichtung koppelbar sind, wobei die Transaktion an einem der beiden Endgeräte durchführbar ist und wobei die Autorisierung an einem der beiden Endgeräte initiierbar ist. Ein Autorisierungsvorgang führt zu einer Verweigerung der Durchführung der Transaktion, wenn eine Ermittlung einer Kennung des Endgerätes fehlschlägt. Die Transaktionsdaten für die Transaktion werden über einen zweiten Übertragungskanal von der Autorisierungseinrichtung empfangen.

Aufgabe der Erfindung ist es daher, ein Verfahren und eine Einrichtung zur Autorisierung einer Transaktion bereitzustellen, welche eine Autorisierung zur Durchführung der Transaktion einerseits vereinfachen und andererseits auch dann durchführbar machen, wenn technische Gegebenheiten eine herkömmliche Autorisierung nicht zulassen.

Demnach wird in einem ersten Aspekt der Erfindung ein Verfahren bereitgestellt, zur Durchführung einer Autorisierung einer Internet-Transaktion durch eine Autorisierungseinrichtung, wobei ein erstes Endgerät und ein zweites Endgerät über ein Kommunikationsnetzwerk mit der Autorisierungseinrichtung koppelbar sind, wobei die Transaktion an einem der beiden Endgeräte durchführbar ist, wobei die Autorisierung an einem der beiden Endgeräte initiierbar ist, und wenn ein erster Autorisierungsvorgang, welcher die Schritte
- Empfangen von Transaktionsdaten durch die Autorisierungseinrichtung von einem der beiden Endgeräte, wobei die Transaktionsdaten über einen ersten Übertragungskanal empfangen werden; und
- Ermitteln, durch die Autorisierungseinrichtung, einer Kennung, welche das eine Endgerät identifiziert;
umfasst, zu einer Verweigerung der Durchführung der Transaktion aufgrund einer fehlgeschlagenen Ermittlung der Kennung führt, wobei die Autorisierungseinrichtung aufgrund der Verweigerung Daten erzeugt zur Übertragung auf eines der beiden Endgeräte, wobei die Daten die Transaktionsdaten und eine Anweisung zur Initiierung eines zweiten Autorisierungsvorganges durch eines der beiden Endgeräte über einen zweiten Übertragungskanal enthalten, wobei die Transaktionsdaten über den zweiten Übertragungskanal von der Autorisierungseinrichtung empfangen werden, und wobei das Erzeugen der Daten durch die Autorisierungseinrichtung ein Ermitteln der Hardwareeigenschaften des ersten oder des zweiten Endgerätes und ein Anpassen der Daten an die Hardwareeigenschaften umfasst.

Der Vorteil gegenüber dem aus dem Stand der Technik bekannten Verfahren liegt darin, dass eine Autorisierung für eine Internet-Transaktion selbst dann durchführbar ist, wenn das Endgerät oder der bereitgestellte Übertragungskanal eine Autorisierung aufgrund technischer Einschränkungen zunächst nicht zulassen. Stellt die Autorisierungseinrichtung fest, dass die Kennung des Endgerätes, an welchem der erste Autorisierungsvorgang initiiert worden ist, nicht ermittelbar ist, fordert sie automatisch die Autorisierung über einen zweiten Übertragungskanal vom einem Endgerät an. Die Wahrscheinlichkeit, dass die Autorisierung erfolgreich abgeschlossen werden kann, wird damit deutlich erhöht.

Bei geeigneter Wahl des zweiten Übertragungskanals, etwa ein Übertragungskanal, welcher die Kennung eines Endgerätes immer überträgt, kann sogar mit sehr hoher Wahrscheinlichkeit sicher gestellt werden, dass Autorisierung erfolgreich abgeschlossen werden kann.

Das Verfahren kann auch die Durchführung einer Autorisierung einer Internet-Transaktion durch eine Autorisierungseinrichtung umfassen, wobei die Transaktion an einem ersten Endgerät durchführbar ist, wobei die Autorisierung an einem zweiten Endgerät initiierbar ist, oder wobei die Transaktion und die Autorisierung an dem ersten Endgerät oder an dem zweiten Endgerät durchführbar und initiierbar sind, wobei das erste Endgerät und das zweite Endgerät über ein Kommunikationsnetzwerk mit der Autorisierungseinrichtung koppelbar sind und wenn der Autorisierungsvorgang, welcher die Schritte
- Empfangen von Transaktionsdaten durch die Autorisierungseinrichtung von dem zweiten Endgerät, wobei die Transaktionsdaten über einen ersten Übertragungskanal empfangen werden; und
- Ermitteln, durch die Autorisierungseinrichtung, einer Kennung, welche das zweite Endgerät identifiziert;
umfasst, zu einer Verweigerung der Durchführung der Transaktion aufgrund einer fehlgeschlagenen Ermittlung der Kennung führt, wobei die Autorisierungseinrichtung aufgrund der Verweigerung Daten erzeugt zur Übertragung auf das erste Endgerät oder auf das zweite Endgerät, wobei die Daten die Transaktionsdaten und eine Anweisung zur Initiierung eines zweiten Autorisierungsvorganges durch das zweite Endgerät über einen zweiten Übertragungskanal enthalten, wobei die Transaktionsdaten über den zweiten Übertragungskanal von der Autorisierungseinrichtung empfangen werden, und wobei das Erzeugen der Daten durch die Autorisierungseinrichtung ein Ermitteln der Hardwareeigenschaften des ersten oder des zweiten Endgerätes und ein Anpassen der Daten an die Hardwareeigenschaften umfasst.

Wenn der erste Autorisierungsvorgang fehlschlägt, weil über den ersten Übertragungskanal für das zweite Endgerät keine Kennung ermittelt werden kann, weil die Kennung etwa nicht übertragen worden ist, wird ein zweiter Autorisierungsvorgang von dem zweiten Endgerät über einen zweiten Übertragungskanal angefordert. Damit kann die Wahrscheinlichkeit, dass für das zweite Endgerät eine Kennung ermittelt werden kann, deutlich erhöht werden.

Ein weiterer Vorteil besteht darin, dass ein Dienstanbieter, welcher beispielsweise einen Zugang zu (kostenpflichtigen) elektronischen Dokumenten bereitstellt, lediglich eine Art der Autorisierung zur Verfügung stellen muss. Ist die erste Autorisierung über die bereitgestellte Art der Autorisierung (z.B. IP-Autorisierung über ein Mobiltelefon) nicht möglich, fordert die Autorisierungseinrichtung automatisch eine zweite Autorisierung über ein zweites Autorisierungsverfahren an, welche über das selbe Endgerät erfolgen kann wie die fehlgeschlagene erste Autorisierung.

Indem die Hardwareeigenschaften des Endgerätes ermittelt werden, kann die Anforderung für eine zweite Autorisierung entsprechend der Hardwareeigenschaften des Endgerätes angepasst werden.

Der zweite Autorisierungsvorgang kann von der Autorisierungseinrichtung durchgeführt werden und einen Schritt zum Ermitteln einer zweiten Kennung, welche jenem Endgerät zugeordnet ist, welches den zweiten Autorisierungsvorgang initiiert, und welches jenes Endgerät identifiziert, umfassen.

Der zweite Autorisierungsvorgang kann vorzugsweise einen Schritt zum Ermitteln einer Transaktionsberechtigung umfassen, wobei die Transaktionsberechtigung abhängig von der Kennung des zweiten Endgerätes sein kann.

Das Ermitteln der zweiten Kennung kann eine Anfrage an eine Servereinrichtung und ein Empfangen der zweiten Kennung von der Servereinrichtung umfassen. Die Servereinrichtung kann auch Bestandteil der Autorisierungseinrichtung sein. Das ist insbesondere dann vorteilhaft, wenn das Endgerät über den zweiten Übertragungskanal mit einer Servereinrichtung kommuniziert. Die Autorisierungseinrichtung kann so auch ohne Zugriff auf den zweiten Übertragungskanal die zweite Kennung ermitteln.

Die zweite Kennung kann über den zweiten Übertragungskanal von der Autorisierungseinrichtung empfangen werden.

Der zweite Übertragungskanal kann ein Mobilfunk-Kurznachrichtenkanal, d.h. ein SMS-Daten- und Signalkanal sein. Damit wird sichergestellt, die zweite Kennung immer ermittelt werden kann, weil der Mobilfunk-Kurznachrichtenkanal die Übertragung einer Kennung vorsieht.

Die Kennung des zweiten Endgerätes umfasst zumindest eines aus Mobile Subscriber Integrated Services Digital Network Number (MSISDN), Eigentümer und Eigentümer-ID.

In einer bevorzugten Ausführungsform kann die Anweisung zur Initiierung des zweiten Autorisierungsvorganges umfassen:
- Daten zum manuellen Erzeugen und Versenden einer Kurznachricht (SMS);
   oder
- Daten zum automatischen Erzeugen und Versenden einer Kurznachricht eines vorherbestimmten Inhaltes an eine vorherbestimmte Telefonnummer; oder
- graphischer Code, in welchem die Daten für ein automatisches Erzeugen und Versenden einer Kurznachricht eines vorherbestimmten Inhaltes an eine vorherbestimmte Telefonnummer codiert sind.

Das Ermitteln der Hardwareeigenschaften umfasst bevorzugt ein Ermitteln der Hardwareeigenschaften der Anzeigeeinrichtung des ersten oder des zweiten Endgerätes. Indem die Hardwareeigenschaften der Anzeigeeinrichtung des Endgerätes ermittelt werden, kann die Anforderung für eine zweite Autorisierung entsprechend der Anzeigeeinrichtung angepasst werden. Damit ist es möglich, die Anforderung in Abhängigkeit von dem Endgerät für jedes Endgerät verfügbar zu machen.

In einem zweiten Aspekt der Erfindung wird ein Verfahren bereitgestellt, zur Durchführung einer Autorisierung einer Internet-Transaktion durch eine Autorisierungseinrichtung, wobei die Transaktion an einem ersten Endgerät durchführbar ist, wobei der Autorisierungsvorgang an einem zweiten Endgerät initiierbar ist und wobei die Autorisierung durch die Autorisierungseinrichtung die Schritte umfasst:
- Empfangen von Transaktionsdaten durch die Autorisierungseinrichtung von dem zweiten Endgerät;
- Ermitteln, durch die Autorisierungseinrichtung, einer Kennung, welche das zweite Endgerät identifiziert;
- Ermitteln einer Transaktionsberechtigung, welche der Kennung des zweiten Endgerätes zuordenbar ist, wobei die Transaktionsberechtigung abhängig von den Transaktionsdaten ist;
- Freigeben der Durchführung der Internet-Transaktion in Abhängigkeit von der Transaktionsberechtigung; und
- Bereitstellen von Daten, welche indikativ für die Freigabe der Durchführung der Internet-Transaktion sind, zur Ausgabe auf dem ersten Endgerät oder auf dem zweiten Endgerät, wobei die Daten die Durchführung der Internet-Transaktion ermöglichen.

Des Weiteren wird durch die Erfindung eine Autorisierungseinrichtung zur Durchführung einer Autorisierung einer Internet-Transaktion bereitgestellt, welche aufweist:
- Mittel zum Empfangen von Transaktionsdaten von einem ersten Endgerät, wobei die Transaktionsdaten die Internet-Transaktion spezifizieren;
- Mittel zum Ermitteln einer Kennung, welche das erste Endgerät identifizieren, wobei die Mittel zum Ermitteln der Kennung über eine Schnittstelle mit einer Servereinrichtung koppelbar sind und wobei die Schnittstelle ausgestaltet ist zum Übermitteln einer Anfrage an die Servereinrichtung und zum Entgegennehmen der Kennung von der Servereinrichtung;
- Mittel zum Ermitteln einer Transaktionsberechtigung, welche dem ersten Endgerät zuordenbar ist; und
- Mittel zum Bereitstellen von Daten, welche indikativ für eine Freigabe oder eine Verweigerung der Durchführung der Transaktion sind, zur Übertragung auf das erste Endgerät oder auf ein zweites Endgerät.

Weitere Einzelheiten und Merkmale der Erfindung ergeben sich aus den Patentansprüchen, sowie der nachfolgenden Beschreibung in Verbindung mit der Zeichnung. Es zeigt
- Fig. 1: eine erste Ausführungsform des erfindungsgemäßen Verfahrens (WAP-Autorisierung);
- Fig. 2: eine weitere Ausführungsform des erfindungsgemäßen Verfahrens (SMS-Autorisierung);
- Fig. 3: eine weitere Ausführungsform des erfindungsgemäßen Verfahrens (PC-WAP-Autorisierung);
- Fig. 4: eine weitere Ausführungsform des erfindungsgemäßen Verfahrens (PC-WAP-SMS-Autorisierung);
- Fig. 5: eine weitere Ausführungsform des erfindungsgemäßen Verfahrens (PC-PremiumSMS-Autorisierung);
- Fig. 6: einen Verfahrensbestandteil des erfindungsgemäßen Verfahrens zur Verwendung mit den Ausführungsformen nach Fig. 3 und Fig. 4;
- Fig. 7: einen Verfahrensbestandteil des erfindungsgemäßen Verfahrens zur Verwendung mit der Ausführungsform nach Fig. 5;
- Fig. 8: eine weitere Ausführungsform des erfindungsgemäßen Verfahrens, wobei die Ausführungsformen nach Fig. 3 und Fig. 5 kombiniert sind; und
- Fig. 9: eine weitere Ausführungsform des erfindungsgemäßen Verfahrens, wobei die Ausführungsformen nach Fig. 4 und Fig. 5 kombiniert sind.

Nachfolgend wird das erfindungsgemäße Verfahren des Autorisierungsvorgangs beschreiben, wobei davon ausgegangen wird, dass dem Autorisierungsvorgang eine Bezahltransaktion folgt. Anstelle der Bezahltransaktion können auch andere Transaktionen folgen.

Mit "Autorisierung" wird die Zuweisung und Überprüfung von Zugriffsrechten auf Daten und Dienste an Benutzer bezeichnet. Die Autorisierung kann nach einer erfolgreichen Authentifizierung (Überprüfung (Verifikation) einer behaupteten Identität, z.B. einer Person) erfolgen. Eine erfolgreiche Autorisierung erlaubt z.B. den Zugriff auf so genannte Ressourcen (z. B. auf Daten) in einem Computernetzwerk, wie etwa das Internet.

### 1) WAP-Autorisierung

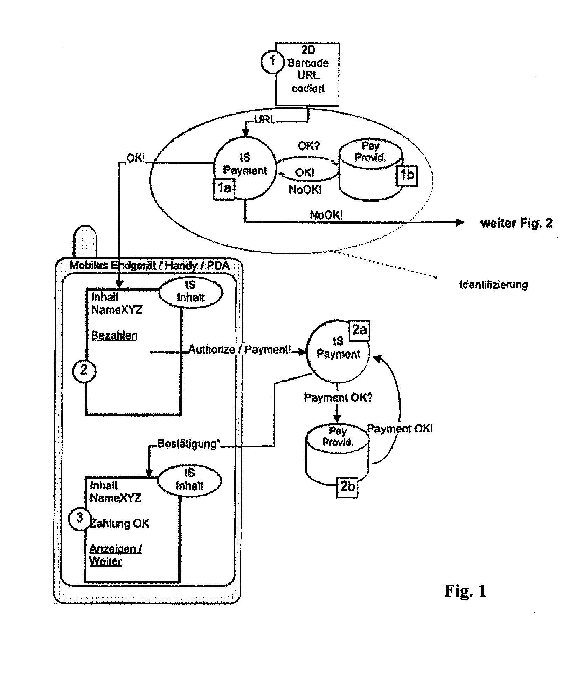

**Fig. 1** zeigt einen erfindungsgemäßen Autorisierungsvorgang (WAP-Autorisierung) mit anschließender Bezahltransaktion über das sog. WAP/IP-Payment, bzw. wie eine User-Ermittlung oder Geräte-Erkennung erfolgen kann.

Ausgangspunkt ist ein graphischer Code 1, welcher auf einem Druckerzeugnis aufgebracht ist oder etwa auf einem Bildschirm angezeigt wird. Als graphischer Code kann etwa ein Strichcode (Barcode), ein 2D-Code, wie z.B. Matrix-Code (QR-Code, Data-Matrix, etc.) oder ein farbiger Code, wie z.B. HCCB (High Capacity Color Barcode) verwendet werden. In den nachfolgenden Ausführungsbeispielen wird immer ein Barcode verwendet. Es können aber jeweils auch die anderen genannten graphischen Codes vorgesehen werden.

Für die Initiierung einer Transaktion kann aber auch Nahfeld-Technologie, wie z.B. RFID vorgesehen. Das Druckerzeugnis kann mit einem RFID-Tag versehen sein, welches die für die Transaktion notwendigen Daten speichert. Diese Daten können z.B. mit einem mobilen Endgerät ausgelesen werden.

In dem Barcode oder dem RFID-Tag kann beispielsweise eine URL codiert oder gespeichert sein. Die mit dieser URL verknüpfte Internetseite kann zusätzliche (z.B. kostenpflichtige) Information zu dem Druckerzeugnis bereithalten.

Der Autorisierungsvorgang, um Zugriff auf die in der URL codierte Internetseite zu erhalten, wird über das mobile Endgerät abgewickelt. In diesem und in den nachfolgenden Ausführungsbeispielen kann das mobile Endgerät ein Mobiltelefon, ein PDA mit Mobiltelefon-Funktionalität (Smartphone), ein Laptop mit Mobiltelefon-Funktionalität o.ä. sein. Die Mobiltelefon-Funktionalität kann z.B. auf den Übertragungstechniken GSM (Global System for mobile Communication) oder UMTS (Universal Mobile Telecommunications System) basieren. Ein stationäres Endgerät kann z.B. ein herkömmlicher Computer sein. Ein stationäres Endgerät kann aber auch ein PDA oder ein Laptop sein, welche geeignet sind, etwa digitale Inhalte z.B. über das Internet zu laden.

Der Autorisierungsvorgang umfasst einen oder mehrere Schritte, in denen zunächst versucht wird das Gerät, welches sich Zugang zu den Daten verschaffen will, zu identifizieren. Beispielsweise kann das Gerät anhand der MSISDN oder einer IP-Adresse identifizierbar sein. In einem weiteren Schritt (innerhalb der Autorisierung) wird dann geprüft, ob dem identifizierten Gerät eine Berechtigung für den Zugriff erteilt werden kann. Kann das Gerät identifiziert werden und kann dem Gerät eine Berechtigung zugewiesen werden, ist der Autorisierungsvorgang erfolgreich abgeschlossen.

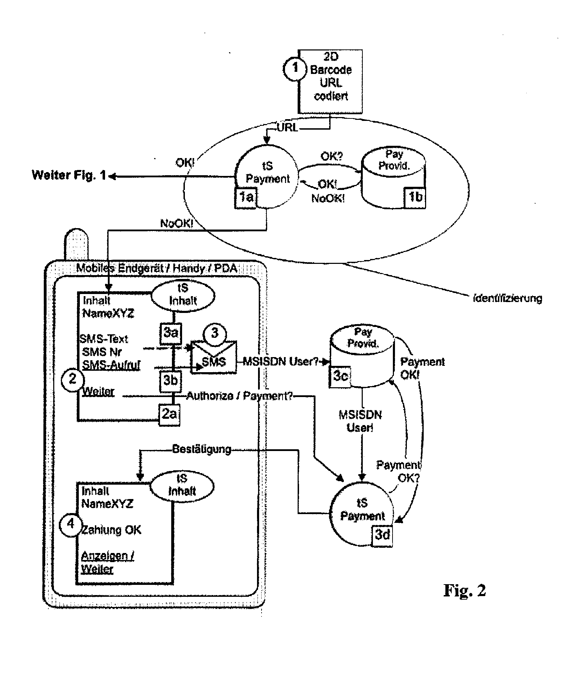

Sobald der Autorisierungsvorgang, welchem eine Bezahltransaktion folgen kann, über das mobile Endgerät abgeschlossen ist, kann auf dem mobilen Endgerät der bezahlte Inhalt eingesehen oder abgerufen werden. Der Autorisierungsvorgang kann auch eine Reihe von anschließenden Transaktionen erlauben (dies gilt auch für nachfolgenden Ausführungsformen nach Fig. 2 bis Fig. 9). Beispielsweise können nach einem erfolgreich durchgeführten Autorisierungsvorgang in einem Onlineshop mehrere Einkäufe getätigt werden.

In den Barcode 1 kann z.B. eine Internet-Adresse codiert sein. Das mobile Endgerät, etwa ein Mobiltelefon, kann mithilfe einer Barcode-Lese-Software (nachfolgend als Barcode-Reader bezeichnet) über die Kamera des Mobiltelefons den Barcode einlesen. Der Barcode-Reader erkennt die darin codierte Internet-Adresse und bietet die Option an, die Adresse z.B. im Browser des Mobiltelefons aufzurufen. Das Aufrufen kann gegebenenfalls vom Nutzer bestätigt werden. Der Browser des mobilen Endgeräts ruft anschließend die zur Internet-Adresse gehörende Internet-Seite auf.

Im Rahmen einer so genannten Identifizierung, welche die Authentifizierung, die Autorisierung und die Geräteeigenschaften des anfragenden Gerätes ermittelt, werden zwei Prozesse durchlaufen:
- Der Prozess "tsPayment" ermittelt, ob eine Authentifizierung und Autorisierung durchgeführt werden können (Schritt 1b). tsPayment kann so ausgestaltet sein, dass darüber auch ein Bezahlprozess abgewickelt werden kann, welcher nach einer erfolgreichen Autorisierung stattfinden kann.
- Der Prozess "tsInhalt" ermittelt, in welcher Form die Darstellung der Internet-Seite auf dem Endgerät zu erfolgen hat (Schritt 1a). Je nach Art des Endgerätes, z.B. Mobiltelefon oder Computerbildschirm wird die Internet-Seite von tsInhalt entsprechend aufbereitet.

Die beiden Prozesse können auf einem Webserver laufen. Die Prozesse können aber auch auf verschiedenen Webserver laufen, wobei die Prozesse über eine spezielle Schnittstelle miteinander kommunizieren.

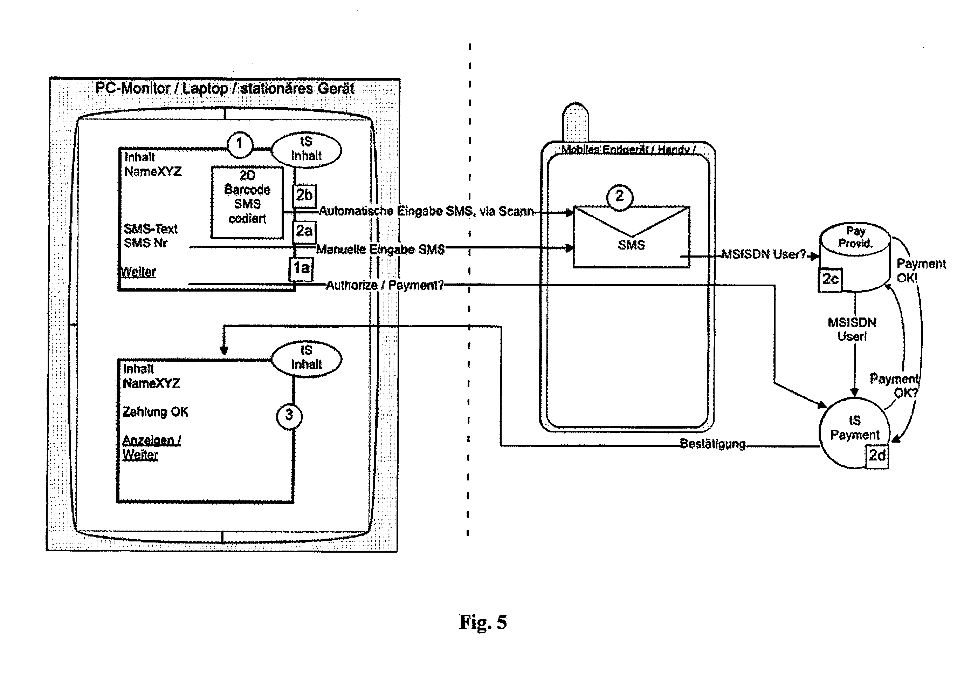

Die beiden Schritte 1a und 1b sind für die nachfolgend beschriebenen Ausführungsformen in Fig. 2 bis Fig. 9 jeweils identisch. Davon ausgenommen ist lediglich die Ausführungsform nach Fig. 5.

### Schritt 1a:

Der ausliefernde Webserver (tSInhalt) erkennt z.B. mittels Useragent-Erkennung (oder Geräteerkennung), dass die Internet-Seite für ein kleines Display (die üblicherweise bei mobilen Geräten eingesetzt werden) ausgeliefert / ausgegeben werden muss.

### Schritt 1b:

Über eine Schnittstelle wird beim Payment-Provider (in den Figuren jeweils mit Pay Provid. bezeichnet) angefragt, ob für das anfragende mobile Endgerät (welches die Internet-Seite aufruft) die Ermittlung der Mobile Subscriber Integrated Services Digital Network Number (MSISDN) des mobilen Endgerätes, des Users, des Eigentümers oder der User-ID durchgeführt werden kann (OK?). Die Art der Ermittlung obliegt dabei dem Payment-Provider.

Anhand der Rückmeldung des Payment-Providers (OK! oder NoOK!) kann eine entsprechende Bezahl-Transaktion eingeleitet:
- WAP/IP mobil (bei OK!) oder
- Internet mobil (bei NoOK!), vgl. Fig. 2.

Bei positiver Rückmeldung (OK!) durch den Payment-Provider wird durch den Webserver (tsInhalt) die Internet-Seite 2 an das mobile Endgerät mit folgenden Elementen ausgegeben: Bezahlen-Link, Inhalt-Intro, Hinweise, Preise, AGB etc. Der Bezahlen-Link kann auch eine andere Bezeichnung haben. Dies stellt den erfolgreichen Abschluss des Autorisierungsvorganges dar.

Bei negativer Rückmeldung (NoOK!), wenn also die MSISDN nicht ermittelt werden kann, bietet der Webserver (tsPayment) automatisch eine alternative Autorisierungsmethode an, um den Autorisierungsvorgang sicher und erfolgreich abzuschließen. Vorteilhaft ist hierbei, dass der Autorisierungsvorgang, im Gegensatz zu den aus dem Stand der Technik bekannten Verfahren, nach einem Fehlversuch nicht einfach beendet wird, sondern dass der Webserver (tsPayment) mittels einer alternativen Autorisierungsmöglichkeit, etwa SMS-Autorisierung versucht, den Autorisierungsvorgang erfolgreich zu beenden. Eine detaillierte Beschreibung hierzu erfolgt mit Bezug auf Fig. 2.

### Schritt 2a:

Mit Klicken auf den Bezahlen-Link wird beim Webserver (tsPayment) die Möglichkeit zur Durchführung der Bezahlung angefragt (Authorize / Payment!). Der Webserver (tsPayment) wiederum fragt über eine Schnittstelle beim Payment-Provider an, ob die Durchführung der Bezahlung möglich ist (Payment OK?).

Der Payment-Provider meldet die Durchführung dieser Transaktion wiederum bei den Mobilfunk-Netzbetreibern an. Die Zuordnung der MSISDN, des Users bzw. des Eigentümers zum entsprechenden Netzbetreiber sowie die Abfrage zur Durchführung einer Bezahltransaktion beim Netzbetreiber (z.B. die Abfrage, ob genügend Prepaid-Guthaben vorhanden ist oder ob die Bonität ausreichend ist oder ob gemäß interner Richtlinien der Mobilfunk-Netzbetreiber eine Transaktion durchführbar ist), obliegt dem Payment-Provider. Es können auch andere Richtlinien bei Abfrage herangezogen werden.

### Schritt 2b:

Kann die Bezahltransaktion durchgeführt werden, so erfolgt eine positive Rückmeldung (Payment OK!) vom Payment-Provider zum anfragenden Webserver (tsPayment).

Der Webserver (tsInhalt) liefert (Bestätigung*) daraufhin eine Internet-Seite 3 an das mobile Endgerät mit einer Bestätigung sowie weiterführenden Links aus. Damit kann der bezahlte Inhalt aufgerufen bzw. geladen werden. Der Autorisierungsvorgang und der Bezahlvorgang waren erfolgreich.

Der Bezahlprozess bzw. die Darstellung des Bezahl-Vorgangs kann über ein oder mehrere Schritte erfolgen. Die Anzahl der durchzuführenden Schritte kann abhängig von den Prozessen und / oder dem Protokoll zwischen dem Payment-Provider und dem entsprechenden Mobilfunk-Netzbetreiber, der im jeweiligen Bezahlprozess eingebunden wird, sein.

Anstelle eines Mobilfunk-Netzbetreibers kann auch eine andere Instanz vorgesehen sein, welche über die nötigen Rechte zur Genehmigung und Durchführung von in diesem Zusammenhang geschilderten Transaktionen verfügt. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 2) SMS-Autorisierung

**Fig. 2** zeigt einen erfindungsgemäßen Autorisierungsvorgang (SMS-Autorisierung) mit anschließender Bezahltransaktion über das sog. SMS-Billing, bzw. wie eine User-Ermittlung / Geräte-Erkennung erfolgen kann, wenn ein erster Autorisierungsversuch fehlgeschlagen ist. Anstelle einer Bezahltransaktion können dem Autorisierungsvorgang auch andere Transaktionen folgen.

Die SMS-Autorisierung ist im Rahmen der Erfindung vorgesehen, wenn durch den Payment-Provider eine negative Rückmeldung (NoOK!) im Rahmen der WAP-Autorisierung, wie sie mit Bezug auf Fig. 1 beschrieben worden ist, erfolgt. Die SMS-Autorisierung kommt also zum Einsatz, wenn die User-Ermittlung, die Geräte-Erkennung oder die Genehmigung einer Bezahltransaktion gemäß der WAP-Autorisierung nicht durchgeführt werden kann.

Damit wird in vorteilhafter Weise die Wahrscheinlichkeit deutlich erhöht, dass ein Autorisierungsvorgang erfolgreich abgeschlossen werden kann. Durch das Ausweichen auf einen alternativen Autorisierungsvorgang (z.B. SMS-Autorisierung) wird die Autorisierung auch dann erfolgreich abgeschlossen, wenn ein erster Autorisierungsversuch, etwa wegen technischer Unzulänglichkeiten eines Endgerätes fehlgeschlagen ist. Ein Dienstanbieter muss nicht mehr verschiedene Autorisierungsvarianten anbieten, um die Autorisierung über unterschiedliche Endgeräte zu ermöglichen. Für den Dienstanbieter ist das Anbieten einer Autorisierungsvariante ausreichend, da der Webserver (tsPayment) automatisch eine andere Autorisierungsvariante anbietet, über den die Autorisierung abgewickelt werden kann.

Ausgangspunkt ist auch hier ein Barcode 1, welcher auf ein Druckerzeugnis aufgebracht ist oder etwa auf einem Bildschirm angezeigt wird. Der Autorisierungsvorgang wird über das mobile Endgerät abgewickelt.

Sobald der Autorisierungsvorgang (vorzugsweise mit anschließender Bezahltransaktion) über das mobile Endgerät abgeschlossen ist, kann auf dem mobilen Endgerät der bezahlte Inhalt eingesehen oder abgerufen werden.

Das Einlesen des Barcodes mit dem mobilen Endgerät sowie der Aufruf der zur Internet-Adresse (aus dem Barcode) gehörenden Internet-Seite erfolgt wie bereits mit Bezug auf Fig. 1 beschrieben.

Die Prozesse tsPayment (Schritt 1b) und tsInhalt (Schritt 1a) im Rahmen einer Identifizierung werden auf dem Webserver durchlaufen (vgl. Schritt 1a und Schritt 1b zu Fig. 1).

Anhand der Rückmeldung des Payment-Providers (OK! oder NoOK!) wird eine entsprechende Bezahl-Transaktion eingeleitet:
- WAP/IP mobil (bei OK!), vgl. Fig. 1, oder
- Internet mobil (bei NoOK!).

Bei der Beschreibung der in Fig. 2 gezeigten Ausführungsform wird davon ausgegangen, dass die Identifizierung und damit die Autorisierung nicht erfolgreich war (NoOK!).

### Schritt 2:

Bei negativer Rückmeldung durch den Payment-Provider (NoOK!) wird durch den Webserver (tsInhalt) die Internet-Seite 2 an das mobile Endgerät mit folgenden Elementen ausgegeben: SMS-Anweisung, SMS-Text, SMS-Nummer, SMS-Link sowie Inhalt-Intro, Hinweise, Preise, AGB etc. und ein Weiter-Link. Der SMS-Link bzw. der Weiter-Link können auch eine andere Bezeichnung haben.

### Schritt 3:

Gemäß der SMS-Anweisung, welche den SMS-Text und die SMS-Nummer enthält, wird durch das mobile Endgerät, vorzugsweise automatisch durch Klicken, Schritt 3b, auf die SMS-Anweisung eine entsprechende SMS erzeugt. Hierbei wird in Abhängigkeit vom verwendeten mobilen Endgerät, der Version und der Funktionen der vorhandenen Browser-Software die SMS entweder z.B. durch den Browser oder durch die native SMS-Applikation erzeugt. Der SMS-Text kann Transaktionsdaten (z.B. Transaktions-ID) enthalten, welche für die Durchführung einer Transaktion von Relevanz sind.

Besonders vorteilhaft ist hierbei, dass die Bereitstellung einer Autorisierung über eine zweite Autorisierungsvariante so erfolgt, dass der Benutzer des Endgerätes die Autorisierung ohne manuelle Dateneingabe vornehmen kann. Es ist lediglich eine Bestätigung für den Start der Autorisierung erforderlich. Falscheingaben, welche zu Falschbuchungen etc. führen können, werden so effizient vermieden. Alternativ kann das Erzeugen der SMS auch durch manuelle Eingabe erfolgen, Schritt 3a, falls das Endgerät das automatische Erzeugen einer SMS nicht unterstützt.

### Schritt 3c:

Durch den Versand der SMS werden MSISDN, Transaktions- ID, SMS-Text, SMS-Zeichen, etc. an den Payment-Provider übermittelt (MSISDN User?). Somit wird ein anderer Übertragungskanal (SMS-Daten- und Signalkanal) zur Übeilragung der Transaktionsdaten genutzt als bei der Übertragung gemäß dem Verfahren nach Fig. 1, wo der WAP-Datenkanal genutzt wird, sodass eine Ermittlung der Kennung des Mobiltelefons und somit eine Autorisierung gewährleistet werden.

Das Zusammenspiel zwischen Payment-Provider und Mobilfunk-Netzbetreiber kann auf unterschiedlichste Art und Weise erfolgen und ist hier nicht näher beschrieben.

### Schritt 3d:

Der Payment-Provider übermittelt dem Webserver (tsPayment) über eine Schnittstelle die MSISDN, den User, den Eigentümer, eine spezielle ID (MSISDN User!) und/oder Transaktionsdetails (z.B. SMS-Text) bzw. eine Kombination davon. Daraufhin fragt der Webserver beim Payment-Provider an, ob die Durchführung der Bezahlung erfolgen kann (Payment OK?). Der Payment-Provider meldet die Durchführung dieser Bezahl-Transaktion wiederum bei den Mobilfunk-Netzbetreibern an.

Die Zuordnung der MSISDN, des Users bzw. des Eigentümers zum entsprechenden Netzbetreiber sowie die Abfrage zur Durchführung einer Bezahltransaktion beim Netzbetreiber (z.B. die Abfrage ob genügend Prepaid-Guthaben vorhanden ist oder ob die Bonität ausreichend ist oder ob gemäß interner Richtlinien der Mobilfunk-Netzbetreiber eine Transaktion durchführbar ist) obliegt dem Payment-Provider.

### Schritt 2a:

Bei Klick auf den Weiter-Link wird beim Webserver (tsPayment) angefragt, ob die Durchführung der Bezahlung erfolgt ist (Authorize / Payment?). Die Anfrage kann auch darin bestehen, nachzufragen, ob die Autorisierung erfolgreich war. Bei negativer Rückmeldung (weil etwa der Schritt 3 nicht vollständig ausgeführt wurde) wird vom Webserver (tsInhalt) die Internet-Seite 2 erneut an das mobile Endgerät mit einem entsprechenden Hinweis ausgegeben.

### Schritt 4:

Bei positiver Rückmeldung (Payment OK!) durch den Payment-Provider liefert der Webserver (tsInhalt) eine Internet-Seite an das mobile Endgerät mit einer Bestätigung sowie weiterführenden Links (Bestätigung) aus. Über diese Links kann der bezahlte Inhalt aufgerufen bzw. geladen werden oder eine neue Transaktion initiiert werden.

Anstelle des Einlesens eines Barcodes kann auf einer mobilen Webseite, welche auf dem mobilen Endgerät angezeigt wird, bereits eine SMS-Anweisung und einen SMS-Link, welche den SMS-Text und die SMS-Nummer enthält, oder die SMS-Nummer und ein SMS-Text angezeigt werden. Der SMS-Link führt dazu, dass die SMS automatisch erzeugt wird. Hierbei wird in Abhängigkeit vom verwendeten mobilen Endgerät, der Version und der Funktionen der vorhandenen Browser-Software die SMS entweder durch den Browser oder durch die native SMS-Applikation erzeugt. Der SMS-Text kann Transaktionsdaten (z.B. Transaktions-ID) enthalten, welche für die Durchführung einer Transaktion von Relevanz sind.

Alternativ kann eine SMS auch manuell mit dem dargestellten SMS-Text an die dargestellte SMS-Nummer versendet werden. Nach erfolgreicher Autorisierung und ggf. Bezahlung wird eine Ergebnisseite an das mobile Endgerät ausgeliefert, welche einen Weiter-Link zum Laden des erworbenen Inhaltes enthält. Anstelle dieser Ergebnisseite kann auch der erworbene Inhalt an das mobile Endgerät ausgeliefert werden. Der Abschluss einer in diesem Zusammenhang beschriebenen Transaktion bzw. die Ausprägung einer solchen wird hier im Detail nicht spezifiziert. So kann etwa im direkten Anschluss an den Autorisierungsvorgang ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 3) PC-WAP-Autorisierung

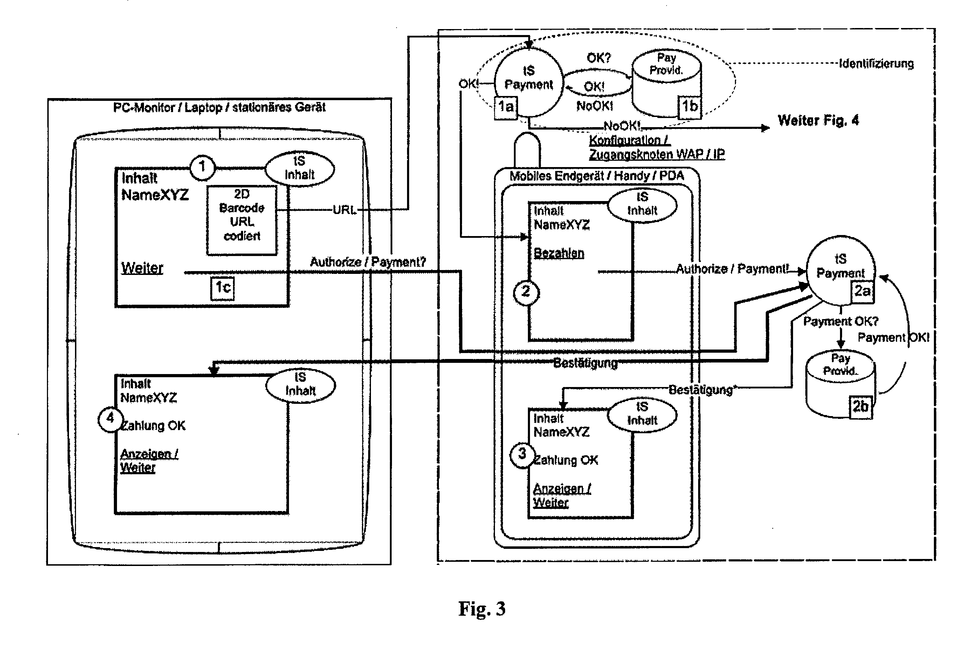

**Fig. 3** zeigt eine Form der Autorisierung (PC-WAP-Autorisierung) mit anschließender Bezahltransaktion über das sog. WAP/IP-Payment bzw. wie eine User-Ermittlung / Geräte-Erkennung erfolgen kann. Diese Ausführungsform basiert auf dem Verfahren, wie es mit Bezug auf Fig. 1 beschrieben ist.

Der Zugang bzw. die Initiierung der Autorisierung erfolgt über einen Barcode, welcher auf einer Webseite platziert ist. Diese Webseite wird auf einer Anzeigeinrichtung eines stationären Gerätes (z.B. Computer) angezeigt.

Dieses Verfahren (nach Fig. 3) zeichnet sich dadurch aus, dass der über das stationäre Endgerät zugängliche Bereich mit dem über das mobile Endgerät durchgeführten Autorisierungsverfahren verknüpft ist. Das bedeutet, dass am stationären Endgerät auf den Autorisierungs-Vorgang hingewiesen wird. Sobald dieser über das mobile Endgerät durchgeführt worden ist, kann auf dem stationären Endgerät der bezahlte Inhalt eingesehen oder abgerufen werden, bzw. können anschließende Transaktionen (z.B. weitere Einkäufe) durchgeführt werden.

Das heißt, dass das Verfahren über zwei verschiedene Endgeräte abgewickelt wird, indem die Hardwareeigenschaften der Endgeräte ermittelt werden. Die ermittelten Hardwareeigenschaften ermöglichen es der Autorisierungseinrichtung
- die Webseiten für die Darstellung am stationären Endgerät (z.B. PC-Monitor) anzupassen bzw. zu optimieren, zur Durchführung z.B. eines Einkaufes von Inhalten oder Produkten, und
- die Webseiten für die Darstellung auf dem Display von mobilen Endgeräten anzupassen bzw. zu optimieren, zur Durchführung der Autorisierung (z.B. Genehmigung eines Einkaufes).

### Schritt 1:

Auf einer Internet-Seite befindet sich ein 2D-Barcode. Der die Seite ausliefernde Webserver (tsInhalt oder Drittanbieter) erkennt mittels Useragent-Erkennung (oder Geräteerkennung), dass die Internet-Seite für ein stationäres Endgerät (PC-Monitor, Notebook, Laptop o.ä.), ausgeliefert bzw. ausgegeben werden muss.

In den Barcode ist eine Internet-Adresse codiert. Der Barcode wird mit dem mobilen Endgerät eingelesen und ausgewertet. Dies erfolgt wie mit Bezug auf Fig. 1 beschrieben. Der Browser des mobilen Endgeräts ruft die zur Internet-Adresse gehörende Internet-Seite auf.

Im Rahmen der Autorisierung werden nun die zu Fig. 1 beschriebenen Prozesse tsPayment (Schritt 1b) und tsInhalt (Schritt 1a) durchlaufen.

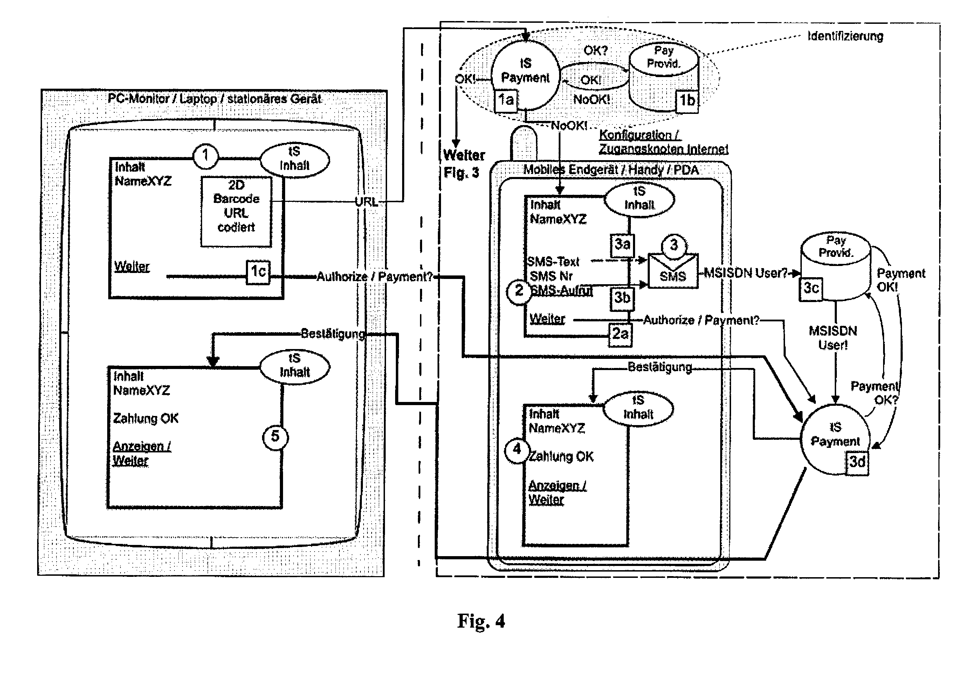

Anhand der Rückmeldung des Payment Providers (OK! oder NoOK!) wird eine entsprechende Bezahl-Transaktion eingeleitet:
- PC - WAP-Payment (OK!), oder
- PC - SMS-Billing (NoOK!), vgl. Fig. 4.

### Schritt 2:

Bei positiver Rückmeldung (OK!) durch den Payment-Provider, wenn die Autorisierung also erfolgreich war, wird von dem Webserver (tsInhalt) die Internet-Seite 2 an das mobile Endgerät mit folgenden Elementen ausgegeben: Bezahlen-Link, Inhalt-Intro, Hinweise, Preise, AGB etc. Der Bezahlen-Link kann auch eine andere Bezeichnung haben.

### Schritt 2a:

Bei Klicken auf den Bezahlen-Link in der Internet-Seite 2 wird beim Webserver (tsPayment) die Möglichkeit zur Durchführung der Bezahlung angefragt (Authorize / Payment!). Der Webserver (tsPayment) wiederum fragt über eine Schnittstelle beim Payment-Provider die Durchführung der Bezahlung an (Payment OK?). Die Kommunikation zwischen Webserver (tsPayment) und Payment-Provider erfolgt wie in Fig. 1 bereits beschrieben.

### Schritt 2b:

Bei positiver Rückmeldung (Payment OK!) durch den Payment-Provider an den Webserver (tsPayment) wird die Bezahltransaktion durchgeführt bzw. die Durchführung genehmigt.

### Schritt 3:

Der Webserver (tsInhalt) liefert daraufhin (Bestätigung*) eine Internet-Seite 3 an das mobile Endgerät mit einer Bestätigung sowie weiterführenden Links. Der Bezahlprozess selbst kann über ein oder mehrere Schritte erfolgen. Dies hängt u.a. von den Prozessen bzw. den Protokollen zwischen dem Payment-Provider und dem entsprechenden Mobilfunk-Netzbetreiber, welche in den jeweiligen Bezahlprozess involviert ist, ab.

Über die weiterführenden Links kann der bezahlte Inhalt aufgerufen bzw. geladen werden oder eine neue Transaktion initiiert werden.

Der Zugriff auf die bezahlten Inhalte kann erfindungsgemäß aber auch über die Webseite 1 am stationären Endgerät erfolgen. Dazu wird nachfolgender Schritt 1c ausgeführt.

### Schritt 1c:

Durch Klick auf den Weiter-Link wird beim Webserver (ts Payment) angefragt, ob die Durchführung der Bezahlung erfolgt ist (Authorize Payment?). Diese Anfrage kann dadurch erfolgen, indem die Anfrage z.B. eine Transaktions-ID überträgt, welche mit einer Transkations-ID während des Autorisierungsvorganges übereinstimmt.

Bei negativer Rückmeldung (etwa weil noch keine Autorisierung über das mobile Endgerät durchgeführt worden ist) wird vom Webserver (tsInhalt) die für das stationäre Endgerät optimierte Seite 1 erneut mit einem entsprechendem Hinweis ausgegeben.

### Schritt 4:

Bei positiver Rückmeldung wird vom Webserver (tsInhalt) eine Bestätigungs-Seite 4 an das das stationäre Endgerät übertragen (Bestätigung). Diese enthält weiterführende Links, über welche der bezahlte Inhalt aufgerufen bzw. geladen werden kann oder weitere Transaktionen durchgeführt werden können.

Diese mit Bezug auf Fig. 3 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 4) PC-WAP-SMS-Autorisierung

**Fig. 4** zeigt eine Form der Autorisierung (PC-WAP-SMS-Autorisierung) mit anschließender Bezahltransaktion über das sog. SMS-Billing bzw. wie eine User-Ermittlung / Geräte-Erkennung erfolgen kann, wenn eineWAP- oder PC-WAP-Autorisierung (wie sie in Fig. 3 beschrieben ist) technisch nicht möglich ist. Diese Ausführungsform basiert auf den Verfahren, wie sie mit Bezug auf Fig. 2 (SMS-Autorisierung) und Fig. 3 (PC-WAP-Autorisierung) beschrieben sind.

Die PC-WAP-SMS-Autorisierung kommt dann als Ersatz-Variante zum Einsatz, wenn die User-Ermittlung, Geräte-Erkennung bzw. Genehmigung von Bezahltransaktionen gemäß der WAP-Autorisierung oder PC-WAP-Autorisierung nicht durchgeführt werden kann.

Der Zugang bzw. die Initiierung der Autorisierung erfolgt (wie in Fig. 3) über einen Barcode, welcher auf einer Webseite platziert ist. Diese Webseite wird auf einer Anzeigeinrichtung eines stationären Gerätes (z.B. Computer) angezeigt.

Dieses Verfahren (nach Fig. 4) zeichnet sich dadurch aus, dass der über das stationäre Endgerät zugängliche Bereich mit dem über das mobile Endgerät durchgeführten Autorisierungsverfahren verknüpft ist. Das bedeutet, dass am stationären Endgerät auf den Autorisierungs-Vorgang hingewiesen wird. Sobald dieser über das mobile Endgerät durchgeführt worden ist, kann auf dem stationären Endgerät der bezahlte Inhalt eingesehen oder abgerufen werden, bzw. können anschließende Transaktionen (z.B. weitere Einkäufe) durchgeführt werden.

Das heißt, es wird zwischen Bereichen interagiert,
- die für die Darstellung von Webseiten am stationären Endgerät (z.B. PC-Monitor) angepasst bzw. optimiert sind, zur Durchführung z.B. eines Einkaufes von Inhalten oder Produkten, und
- die für die Darstellung von Webseiten auf dem Display von mobilen Endgeräten angepasst bzw. optimiert sind, zur Durchführung der Autorisierung (z.B. Genehmigung eines Einkaufes).

### Schrittw 1, 1a und 1b:

Die Schritte 1, 1a und 1b entsprechen im Wesentlichen den Schritten 1, 1a und 1b zu Fig. 3.

Anhand der Rückmeldung des Payment Providers (OK! oder NoOK!) wird eine entsprechende Bezahl-Transaktion eingeleitet:
- PC - WAP-Payment (OK!), vgl. Fig. 3, oder
- PC - SMS- Billing (NoOK!).

### Schritt 2:

Bei negativer Rückmeldung (NoOK!) durch den Payment-Provider wird die Internet-Seite 2 auf das mobile Endgerät mit folgenden Elementen übertragen: SMS-Anweisung, SMS-Text, SMS-Nummer, SMS-Link, Inhalt-Intro, Hinweise, Preise, AGB, etc. sowie ein Weiter-Link.

Der SMS-Link bzw. der Weiter-Link kann auch eine andere Bezeichnung haben.

Die nachfolgenden Schritte 3, 3a, 3b, 3c, 3d, 2a und 4 entsprechen im Wesentlichen den Schritten 3, 3a, 3b, 3c, 3d, 2a und 4 aus Fig. 2. Insofern kann auf die Beschreibung zu Fig. 2 verwiesen werden.

### Schritt 1c:

Durch Klicken auf den Weiter-Link in der Webseite 1 auf dem stationären Endgerät wird beim Webserver (tsPayment) angefragt (Authorize Payment?), ob die Durchführung der Bezahlung erfolgt ist. Bei negativer Rückmeldung wird vom Webserver (tsInhalt) die für das stationäre Endgerät optimierte Seite 1 erneut mit einem entsprechendem Hinweis ausgegeben.

### Schritt 5:

Bei positiver Rückmeldung (Authorize / Payment?) vom Webserver wird eine Bestätigungs-Seite an das stationäre Endgerät geliefert (Bestätigung). Diese enthält weiterführende Links. Über diese Links kann der bezahlte Inhalt aufgerufen bzw. geladen werden oder weitere Transaktionen durchgeführt werden.

Diese mit Bezug auf Fig. 4 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen wird im Detail nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 5) PC - PremiumSMS-Autorisierung

**Fig. 5** zeigt eine Form der Autorisierung (PC-PremiumSMS-Autorisierung) mit gleichzeitiger Bezahltransaktion über das sog. SMS-Billing bzw. wie eine User-Ermittlung / Geräte-Erkennung erfolgen kann, wenn eine Autorisierung, wie sie in Fig. 1 bis Fig. 4 beschrieben sind, nicht eingesetzt werden können oder sollen.

Ausgangspunkt ist hier ein Barcode, welcher auf einer Webseite an dem stationären Endgerät angezeigt wird.

Sobald die Autorisierung bzw. die Bezahltransaktion über das mobile Endgerät (per SMS) durchgeführt worden ist, kann auf dem stationären Endgerät der bezahlte Inhalt eingesehen oder abgerufen werden oder weitere Transaktionen durchgeführt werden.

### Schritt 1:

Auf einer Internet-Seite 1 befindet sich ein 2D-Barcode. Der die Seite ausliefernde Webserver (tsInhalt oder ein eines Drittanbieters) erkennt mittels Useragent-Erkennung (oder Geräteerkennung), dass die Internet-Seite für ein stationäres Endgerät (z.B. PC-Monitor, Notebook, Laptop, o.ä.), ausgeliefert / ausgegeben werden muss. Die Internet-Seite 1 enthält neben dem Barcode folgende Elemente: SMS-Anweisung, SMS-Text, SMS-Nummer, Inhalt-Intro, Hinweise, Preise, AGB, etc. und einen Weiter-Link. In den Barcode ist eine SMS-Anweisung codiert.

### Schritt 2:

Als nächstes wird eine SMS erzeugt und versandt.

### Schritt 2a:

Das Erstellen der SMS kann manuell anhand der ausgegebenen Daten erfolgen.

### Schritt 2b:

Alternativ kann das Erstellen der SMS durch Fotografieren oder Scannen des Barcodes automatisch erfolgen. Das mobile Endgerät kann mithilfe eines Barcode-Readers über die Kamera den Barcode auslesen. Der Barcode-Reader erkennt die SMS-Zeichen und bietet die Option an, die SMS zu erzeugen und ggf. zu versenden. Es ist auch möglich, dass die SMS durch die native SMS-Applikation des mobilen Gerätes erzeugt wird.

Es kann vorgesehen sein, dass das Erzeugen und Versenden der SMS jeweils durch den Nutzer bestätigt werden muss.

### Schritt 2c:

Durch den Versand der SMS werden MSISDN, Transaktions-ID, SMS-Text, SMS-Zeichen, etc. an den Payment-Provider übermittelt (MSISDN User?).

### Schritt 2d:

Der Payment-Provider übermittelt dem Webserver (ts Payment) über eine Schnittstelle die MSISDN, den User, den Eigentümer und/oder eine spezielle ID (MSISDN User!) sowie ggf. Transaktionsdaten (welche z.B. im SMS-Text enthalten sein können). Daraufhin fragt der Webserver beim Payment-Provider die Durchführung der Bezahlung an (Payment OK?).

Der Payment-Provider meldet die Durchführung dieser Bezahltransaktion bei dem Mobilfunk-Netzbetreiber an. Die Zuordnung der MSISDN, des Users bzw. des Eigentümers zum entsprechenden Netzbetreiber sowie die Abfrage zur Durchführung einer Bezahltransaktion beim Netzbetreiber obliegen dem Payment-Provider. Bezüglich des weiteren Ablaufes zwischen Netzbetreiber und dem Payment-Provider wird auf Schritt 2a zu Fig. 1 verwiesen.

### Schritt 1a:

Durch Klicken auf den Weiter-Link in der Internet-Seite 1 wird beim Webserver (tsPayment) angefragt, ob die Durchführung der Bezahlung erfolgt ist (Authorize / Payment?). Bei negativer Rückmeldung wird vom Webserver (tsInhalt) die für das stationäre Endgerät optimierte Internet-Seite 1 erneut mit einem entsprechendem Hinweis ausgegeben.

### Schritt 3:

Bei positiver Rückmeldung (Authorize / Payment?) wird vom Webserver (tsInhalt) eine Bestätigungs-Seite 3 an das stationäre Endgerät ausgeliefert (Bestätigung). Diese Seite enthält weiterführende Links. Über diese Links kann der bezahlte Inhalt aufgerufen oder geladen werden bzw. weitere Transaktion initiiert werden.

Diese mit Bezug auf Fig. 5 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen ist nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 6) Verfahrenseinleitung für PC-WAP-Autorisierung oder PC-WAP-SMS-Autorisierung

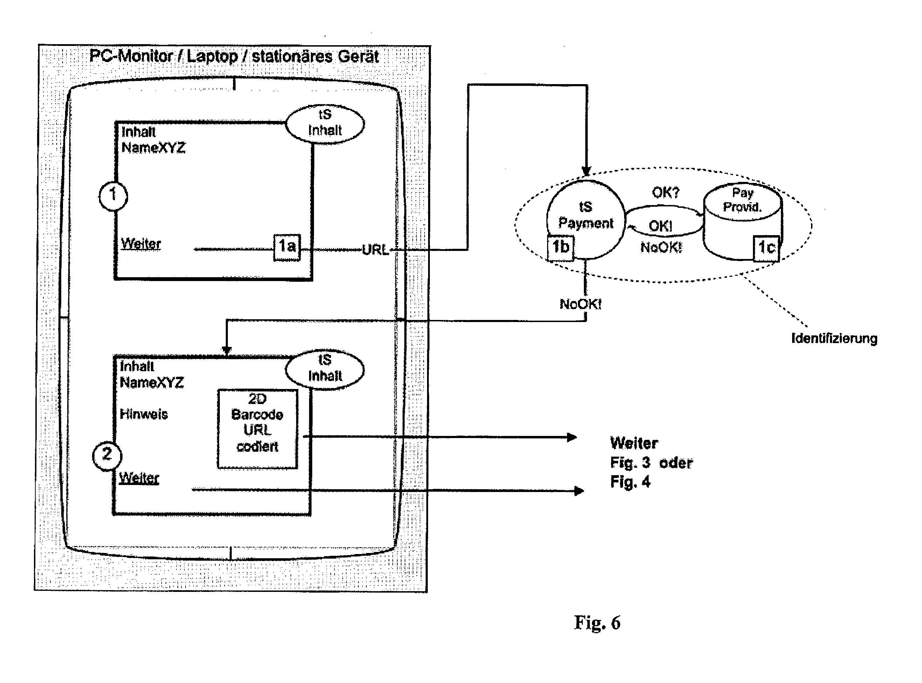

**Fig. 6** zeigt ein Verfahren, welches optional den Verfahren PC-WAP-Autorisierung (vgl. Fig. 3) und/oder PC-WAP-SMS-Autorisierung (Fig. 4). vorgeschaltet werden kann.

### Schritt 1:

Auf einer Internet-Seite 1 (auf einem stationäre Endgerät) befindet sich ein Inhalt-Intro und ein Weiter-Link. Das Inhalt-Intro kann aus Produkt beschreibenden Texten, Bildern, Preishinweisen, AGB etc. bestehen.

### Schritt 1a:

Durch Klicken auf den Weiter-Link wird beim Webserver (tsPayment) die Möglichkeit zur Durchführung einer Autorisierung (oder einer Bezahl-Transaktion) angefragt.

### Schritt 1b:

Über eine Schnittstelle wird beim Payment-Provider angefragt (OK?), ob für das anfragende Gerät die MSISDN, der User oder der Eigentümer ermittelt werden kann. Die Art der Ermittlung obliegt hierbei dem Payment-Provider.

### Schritt 1c:

Anhand der Rückmeldung des Providers (OK! oder NoOK!) wird der Autorisierungs-Prozess (und ggf. eine anschließende Bezahl-Transaktion) eingeleitet gemäß den Verfahren
- PC-WAP-Autorisierung (vgl. Fig. 3) oder
- PC-WAP-SMS-Autorisierung (vgl. Fig. 4)

Der Abschluss einer in diesem Zusammenhang beschriebenen Transaktion bzw. die Ausprägung einer solchen ist nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 7) Verfahrenseinleitung für PC-PremiumSMS-Autorisierung

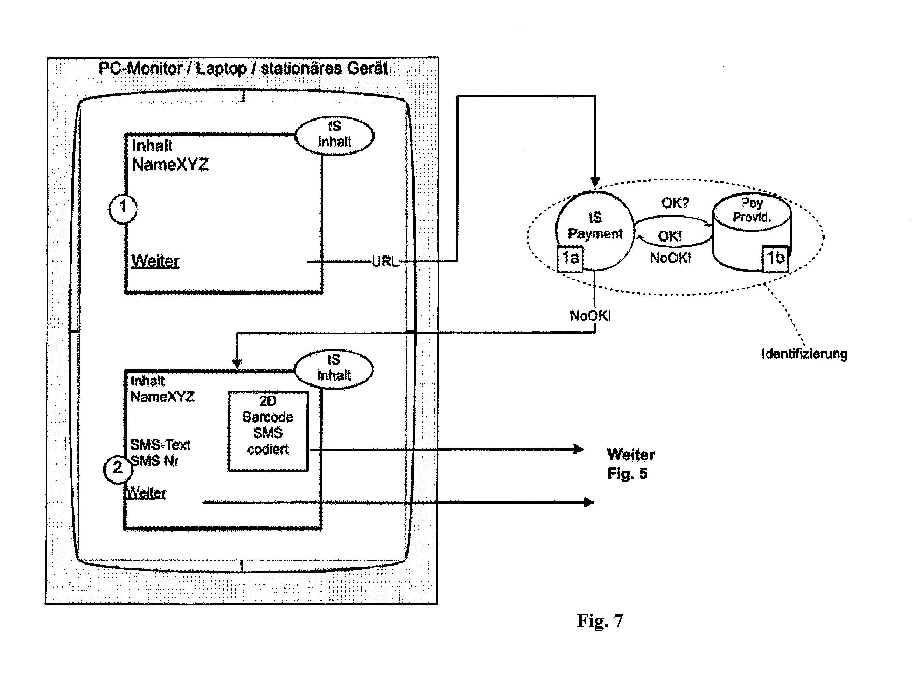

**Fig. 7** zeigt ein Verfahren, welches optional dem Verfahren PC-PremiumSMS-Autorisierung) (vgl. Fig. 5) vorgeschaltet werden kann.

### Schritt 1:

Auf einer Internet-Seite 1 eines stationären Endgerätes befindet sich ein Inhalt-Intro und ein Weiter-Link. Das Inhalt-Intro kann aus Produkt beschreibenden Texten, Bildern, Preishinweisen, AGB etc. bestehen.

### Schritte 1a, 1b und 1c:

Die Schritte 1a, 1b und 1c entsprechen den Schritte 1a, 1b und 1c zu Fig. 6, wobei im Schritt 1c anhand der Rückmeldung des Payment-Providers (OK! oder NoOK!) der Autorisierungs-Prozess (und ggf. eine anschließende Bezahl-Transaktion) gemäß dem Verfahren PC-PremiumSMS-Autorisierung (vgl. Fig. 5) eingeleitet wird. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 8) PC-WAP-Autorisierung kombiniert mit PC-PremiumSMS-Autorisierung

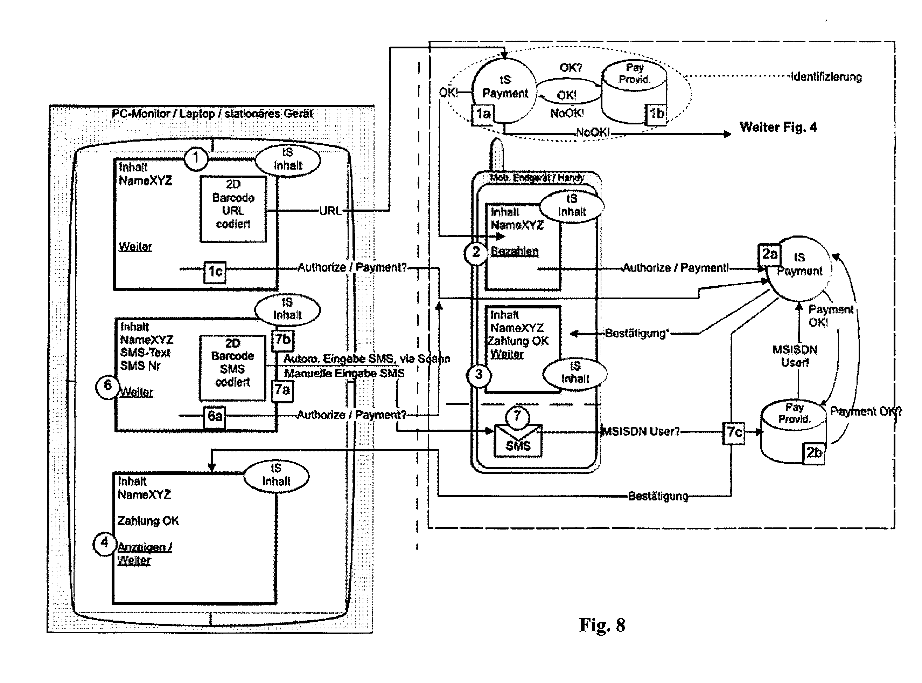

**Fig. 8** zeigt eine erfindungsgemäße Kombination der PC-WAP-Autorisierung (vgl. Fig. 3) mit der PC-PremiumSMS-Autorisierung (vgl. Fig. 5).

### Schritt 1:

Auf einer Internet-Seite, welche auf einem stationären Endgerät angezeigt wird, befindet sich ein 2D-Barcode. Der die Seite ausliefernde Webserver (tsInhalt oder der Webserver eines Drittanbieters) erkennt z.B. mittels Useragent-Erkennung (oder Geräteerkennung), dass die Internet-Seite für ein stationäres Endgerät (z.B. PC-Monitor, Notebook, Laptop, o.ä.) erstellt und ausgeliefert bzw. ausgegeben werden muss.

In den Barcode ist eine Internet-Adresse (URL) codiert. Das mobile Endgerät kann mithilfe einer Barcode-Reader-Software über die Kamera den Barcode auslesen. Der Barcode-Reader erkennt die Internet-Adresse und bietet die Option an, die Adresse im Browser des mobilen Endgerätes aufzurufen. Das Aufrufen der Seite kann gegebenenfalls vom Nutzer bestätigt werden. Der Browser des mobilen Endgeräts ruft die zur Internet-Adresse zugehörige Internet-Seite auf.

Zwei Prozesse werden im Rahmen der Identifizierung durchlaufen:
- Der Prozess "tsPayment" ermittelt ob eine Bezahltransaktion durchgeführt werden kann (Schritt 1b);
- Der Prozess "tsInhalt" ermittelt in welcher Form die Darstellung der Internet-Seite zu erfolgen hat (Schritt 1a).

Die Schritte 1a und 1b entsprechen den Schritten 1a und 1b wie sie mit Bezug zu Fig. 1 und Fig. 3 beschrieben sind.

Anhand der Rückmeldung des Providers (OK! oder NoOK!) wird der Autorisierungs-Prozess (und ggf. eine anschließende Bezahl-Transaktion) eingeleitet gemäß den Verfahren
- PC-WAP-Autorisierung (vgl. Fig. 3) oder
- PC-PremiumSMS-Autorisierung (vgl. Fig. 5).

### Schritt 2:

Bei positiver Rückmeldung (OK!) durch den Payment-Provider wird die Internet-Seite an das mobile Endgerät mit folgenden Elementen ausgegeben: Bezahlen-Link, Inhalt-Intro, Hinweise, Preise, AGB, etc. Der Bezahlen-Link kann auch eine andere Bezeichnung haben.

### Schritt 2a:

Durch Klick auf den Bezahlen-Link (der mobilen Internet-Seite) wird beim Webserver (tsPayment) die Möglichkeit der Durchführung der Bezahlung angefragt (Authorize Payment!). Der Webserver (tsPayment) fragt über eine Schnittstelle beim Payment-Provider die Durchführung der Bezahlung an (Payment OK?). Der Payment-Provider meldet die Durchführung dieser Bezahl-Transaktion wiederum bei den Mobilfunk-Netzbetreibern an. Die Zuordnung des MSISDN, des Users oder des Eigentümers zum entsprechenden Mobilfunk-Netzbetreiber sowie die Abfrage zur Durchführung einer Bezahltransaktion beim Netzbetreiber obliegt dem Payment-Provider.

### Schritt 2b:

Bei positiver Rückmeldung (Payment OK!) durch den Payment-Provider wird die Bezahltransaktion durchgeführt bzw. die Durchführung genehmigt.

### Schritt 3:

Der Webserver (tsInhalt) liefert daraufhin eine Internet-Seite an das mobile Endgerät mit einer Bestätigung sowie weiterführenden Links (Bestätigung*). Der Bezahlprozess bzw. die Darstellung des Bezahl-Vorgangs kann über ein oder mehrere Schritte erfolgen. Die Anzahl der durchzuführenden Schritte kann abhängig sein von den Prozessen zwischen dem Payment-Provider und dem entsprechenden Mobilfunk-Netzbetreiber, welcher in den jeweiligen Bezahlprozess involviert ist. Über die Links kann der bezahlte Inhalt aufgerufen bzw. geladen werden oder ein neuer Bezahl-Prozess oder eine weiterer Transaktion initiiert werden.

### Schritt 1c:

Durch Klicken auf den Weiter-Link (am stationären Endgerät) wird beim Webserver (tsPayment) angefragt, ob die Durchführung der Bezahlung erfolgt ist (Authorize Payment?) bzw. erfolgreich war.

### Schritt 4:

Bei positiver Rückmeldung (Authorize / Payment?) wird vom Webserver (tsInhalt) eine Bestätigungs-Seite an das stationäre Endgerät geliefert (Payment Bestätigung). Diese enthält weiterführende Links. Über diese Links kann der bezahlte Inhalt aufgerufen bzw. geladen werden oder eine weitere Transaktion bzw. ein neuer Bezahl-Prozess initiiert werden.

Die nachfolgenden Schritte sind charakteristisch für die Kombination der Verfahren PC-WAP-Autorisierung mit PC-PremiumSMS-Autorisierung.

### Schritt 6:

Bei negativer Rückmeldung für das stationäre Endgerät (weil etwa die Schritte 1a, 1b, 2, 2a, 2b, 3, etc. nicht vollständig durchgeführt worden sind) wird vom Webserver (tsInhalt) eine neue für das stationäre Endgerät optimierte Seite ausgegeben. Die Seite enthält neben einem neu erzeugten, weiteren Barcode folgende Elemente: SMS-Anweisung, SMS-Text, SMS-Nummer, Inhalt-Intro, Hinweise, Preise, AGB, und einen Weiter-Link. In den Barcode ist eine SMS codiert.

### Schritt 7:

Gemäß der SMS-Anweisung wird eine entsprechende SMS erzeugt.

### Schritt 7a:

Das SMS-Schreiben kann durch manuelle Eingabe erfolgen.

### Schritt 7b:

Das Erzeugen der SMS kann durch Scannen oder Fotografieren des Barcodes automatisch erfolgen. Das mobile Endgerät kann mithilfe einer Barcode-Reader-Software über die Kamera den Barcode auslesen. Der Barcode-Reader erkennt die SMS-Zeichen und bietet die Option an, die SMS zu erzeugen. Das Erzeugen wird gegebenenfalls vom Nutzer bestätigt. Hierbei wird in Abhängigkeit vom verwendeten mobilen Endgerät, der Version und der Funktionen der vorhandenen Browser-Software die SMS entweder durch den Browser, durch eine native SMS-Applikation oder durch die Barcode-Reader-Software erzeugt.

### Schritt 7c:

Durch den Versand der SMS werden MSISDN, Transaktions- ID, SMS-Text, SMS-Zeichen, Transaktionsdetails etc. an den Payment-Provider übermittelt (MSISDN User?). Die Transaktionsdetails können Bestandteil des SMS-Textes sein. Der Payment-Provider übermittelt dem Webserver (tsPayment) über eine Schnittstelle die MSISDN, den User, den Eigentümer und/oder eine spezielle ID (MSISDN User!). Daraufhin fragt der Webserver beim Payment-Provider die Durchführung der Bezahlung an (Payment OK?).

### Schritt 6a:

Durch Klick auf den Weiter-Link wird beim Webserver (tsPayment) angefragt, ob die Durchführung der Bezahlung erfolgt ist bzw. erfolgreich war (Authorize / Payment?). Bei negativer Rückmeldung (weil z.B. die Schritte 1 - 3 und 7 ff. nicht vollständig durchgeführt worden sind) wird vom Webserver (tsInhalt) eine neue für das stationäre Endgerät optimierte Seite 6 ausgegeben. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 9) PC-WAP-SMS- Autorisierung kombiniert mit PC-PremiumSMS-Autorisierung

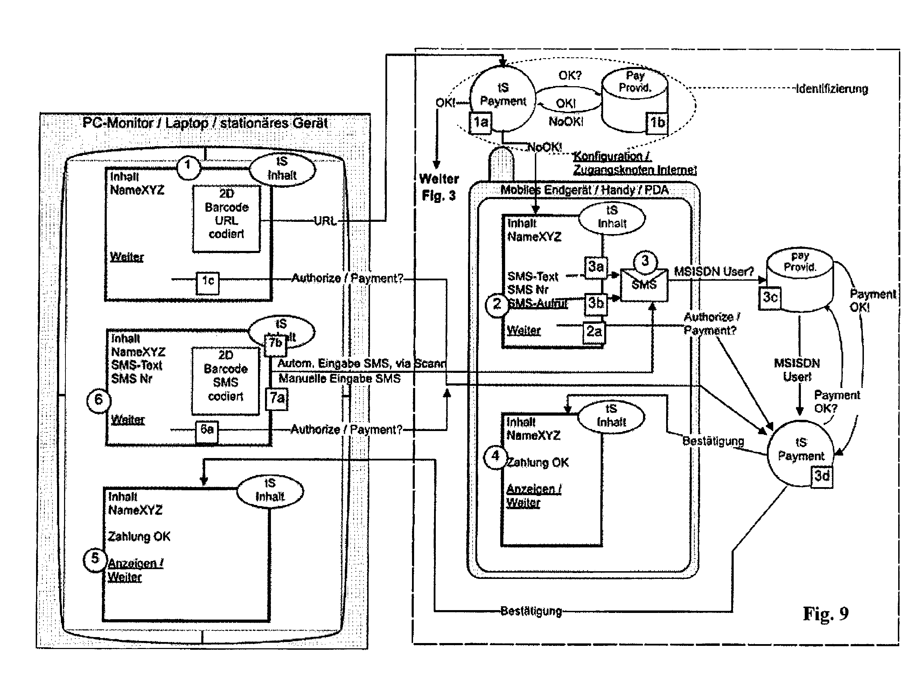

**Fig. 9** zeigt eine erfindungsgemäße Kombination der PC-WAP-SMS-Autorisierung (vgl. Fig. 4) mit der PC-PremiumSMS-Autorisierung (vgl. Fig. 5).

### Schritt 1:

Auf einer Internet-Seite des stationären Endgerätes befindet sich ein 2D-Barcode. Der die Internet-Seite ausliefernde Webserver (tsInhalt oder der Webserver eines Drittanbieters) erkennt mittels Useragent-Erkennung (oder Geräteerkennung), dass die Internet-Seite für einen stationäres Endgerät (z.B. Computer-Monitor, Notebook, Laptop, o.ä.) ausgeliefert bzw. ausgegeben werden muss. In den Barcode ist eine Internet-Adresse codiert. Das mobile Endgerät kann mit Hilfe einer Barcode-Reader-Software über die Kamera den Barcode auslesen. Der Barcode-Reader erkennt die Internet-Adresse und bietet die Option an, die Adresse im Browser des mobilen Endgerätes aufzurufen. Das Aufrufen wird gegebenenfalls vom Nutzer bestätigt.

Zwei Prozesse werden im Rahmen der Identifizierung durchlaufen (vgl. Fig. 1):
- der Prozess "tsPayment" ermittelt, ob eine Bezahltransaktion durchgeführt werden kann (Schritt 1b);
- der Prozess "tsInhalt" ermittelt, in welcher Form die Darstellung der Internet-Seite zu erfolgen hat (Schritt 1a).

Die Schritte 1a und 1b entsprechen den Schritten 1a und 1b, wie sie mit Bezug zu Fig. 1 und Fig. 3 beschrieben sind.

Anhand der Rückmeldung des Providers (OK! oder NoOK!) wird der Autorisierungs-Prozess (und ggf. eine anschließende Bezahl-Transaktion) eingeleitet gemäß den Verfahren
- 3) PC-WAP-Autorisierung (vgl. Fig. 3) oder
- 4) PC-WAP-SMS-Autorisierung (vgl. Fig. 4),

### Schritt 2:

Bei negativer Rückmeldung (NoOK!) durch den Payment-Provider wird die Internet-Seite an das mobile Endgerät mit folgenden Elementen ausgegeben: SMS-Anweisung, SMS-Text, SMS-Nummer, SMS-Link, Inhalt-Intro, Hinweise, Preise, AGB und ein Weiter-Link. Der SMS- bzw. der Weiter-Link kann auch eine andere Bezeichnung haben.

### Schritt 3:

Gemäß der SMS-Anweisung wird eine entsprechende SMS erzeugt.

### Schritt 3a:

Das SMS-Schreiben kann durch manuelle Eingabe erfolgen.

### Schritt 3b:

Das Erzeugen kann automatisch erfolgen, durch Klicken auf den SMS-Link. Hierbei wird in Abhängigkeit vom verwendeten mobilen Endgerät, der Version und der Funktionen der vorhandenen Browser-Software die SMS entweder durch den Browser oder durch die native SMS-Applikation erzeugt.

### Schritt 3c:

Durch den Versand der SMS werden MSISDN, Transaktions- ID, SMS-Text, SMS-Zeichen etc. an den Payment-Provider übermittelt (MSISDN User?).

### Schritt 3d:

Der Payment-Provider übermittelt dem Webserver (tsPayment) über eine Schnittstelle die MSISDN, den User, den Eigentümer und/oder eine spezielle ID (MSISDN User!). Daraufhin fragt der Webserver beim Payment-Provider die Durchführung der Bezahlung an (Payment OK?).

Der Payment-Provider meldet die Durchführung der Bezahl-Transaktion wiederum bei den Mobilfunk-Netzbetreibern an. Die Zuordnung der MSISDN, des Users bzw. des Eigentümers zum entsprechenden Netzbetreiber sowie die Abfrage zur Durchführung einer Bezahltransaktion beim Netzbetreiber obliegt dem Payment-Provider. Bezüglich des weiteren Ablaufes zwischen Netzbetreiber und dem Payment-Provider wird auf Schritt 2a zu Fig. 1 verwiesen.

### Schritt 2a:

Durch Klick auf den Weiter-Link wird beim Webserver (tsPayment) angefragt, ob die Durchführung der Bezahlung erfolgt ist bzw. erfolgreich war (Authorize Payment?).

### Schritt 4:

Bei positiver Rückmeldung (Payment OK!) durch den Payment-Provider liefert der Webserver (tsInhalt) eine Internet-Seite an das mobile Endgerät mit einer Bestätigung sowie weiterführenden Links (Payment-Bestätigung). Über die weiterführenden Links kann der bezahlte Inhalt aufgerufen bzw. geladen werden oder eine neue Transaktion initiiert werden.

### Schritt 1c:

Durch Klick auf den Weiter-Link wird beim Webserver (tsPayment) angefragt, ob die Durchführung der Bezahlung erfolgt ist bzw. erfolgreich war (Authorize Payment?).

### Schritt 5:

Bei positiver Rückmeldung (Authorize/ Payment?) wird vom Webserver (tsInhalt) eine Bestätigungs-Seite an das stationäre Endgerät geliefert (Payment Bestätigung). Diese enthält weiterführende Links. Über die weiterführenden Links kann der bezahlte Inhalt aufgerufen bzw. geladen werden oder eine neue Transaktion initiiert werden.

Die nachfolgenden Schritte sind charakteristisch für die Kombination der Verfahren PC-WAP-SMS- Autorisierung mit PC-PremiumSMS-Autorisierung.

### Schritt 6:

Bei negativer Rückmeldung (weil z.B. die Schritte 1a, 1b, 2, 2a, 2b, 3 nicht oder nocht vollständig durchgeführt worden sind) wird vom Webserver (tsInhalt) eine neue für stationäre Endgeräte optimierte Internet-Seite ausgegeben. Diese Internet-Seite enthält neben einem neu erzeugten, weiteren Barcode folgende Elemente: SMS-Anweisung, SMS-Text, SMS-Nummer, Inhalt-Intro, Hinweise, Preise, AGB und einen Weiter-Link. In den Barcode ist eine SMS bzw. eine SMS-Anweisung codiert.

### Schritt 3:

Gemäß der SMS-Anweisung wird eine entsprechende SMS erzeugt.

### Schritt 7a:

Das SMS-Schreiben kann durch manuelle Eingabe erfolgen. Schritt 7a entspricht im Wesentlichen Schritt 3a.

### Schritt 7b:

Schritt 7b entspricht im Wesentlichen Schritt 3b. Das Erzeugen der SMS kann durch Scannen des Barcodes automatisch erfolgen. Das mobile Endgerät kann Mithilfe der Barcode-Reader-Software über die Kamera den Barcode auslesen. Der Barcode-Reader erkennt die SMS-Zeichen bzw. die SMS-Anweisung und bietet die Option an, die SMS zu erzeugen. Das Erzeugen wird gegebenenfalls vom Nutzer bestätigt. Hierbei wird in Abhängigkeit vom verwendeten mobilen Endgerät, der Version und der Funktionen der vorhandenen Browser-Software die SMS entweder durch den Browser, durch die native SMS-Applikation oder durch die Barcode-Reader-Software erzeugt.

### Schritt 3c:

Durch den Versand der SMS werden MSISDN, Transaktions- ID, SMS-Text, SMS-Zeichen, etc. an den Payment-Provider übermittelt (MSISDN User?). Der Payment-Provider übermittelt dem Webserver (tsPayment) über eine Schnittstelle die MSISDN, den User, den Eigentümer, eine spezielle ID (MSISDN User!) und/oder Transaktionsdetails (z.B. SMS-Text). Daraufhin fragt der Webserver beim Payment-Provider die Durchführung der Bezahlung an (Payment OK?).

### Schritt 6a:

Durch Klick auf den Weiter-Link wird beim Webserver (tsPayment) angefragt, ob die Durchführung der Bezahlung erfolgt ist (Authorize / Payment?). Bei negativer Rückmeldung (weil etwa die Schritte 1 bis 7 nicht oder nicht vollständig durchgeführt worden sind) wird vom Webserver (tsInhalt) eine neue für stationäre Endgeräte optimierte Seite 6 ausgegeben. Der Abschluss einer in diesem Zusammenhang beschriebenen Transaktion bzw. die Ausprägung einer solchen wird hier nicht im Detail spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

## Patentansprüche

1. Verfahren zur Durchführung einer Autorisierung einer Internet-Transaktion durch eine Autorisierungseinrichtung (A), wobei ein erstes Endgerät (E1) und ein zweites Endgerät (E2) über ein Kommunikationsnetzwerk mit der Autorisierungseinrichtung (A) gekoppelt sind, wobei die Transaktion an einem der beiden Endgeräte (E1, E2) durchführbar ist, wobei die Autorisierung an einem der beiden Endgeräte (E1, E2) initiierbar ist, **dadurch gekennzeichnet, daß** wenn ein erster Autorisierungsvorgang (AV1), welcher die Schritte
- Empfangen von Transaktionsdaten durch die Autorisierungseinrichtung (A) von einem der beiden Endgeräte (E1, E2), wobei die Transaktionsdaten über einen ersten Übertragungskanal (K1) empfangen werden; und
- Ermitteln, durch die Autorisierungseinrichtung (A), einer ersten Kennung (ID1), welche das eine Endgerät identifiziert;
umfasst, zu einer Verweigerung der Durchführung der Transaktion aufgrund einer fehlgeschlagenen Ermittlung der ersten Kennung (ID1) führt,
die Autorisierungseinrichtung (A) aufgrund der Verweigerung Daten erzeugt zur Übertragung an eines der beiden Endgeräte (E1, E2), wobei die Daten die Transaktionsdaten und eine Anweisung zur Initiierung eines zweiten Autorisierungsvorganges (AV2) durch eines der beiden Endgeräte (E1, E2) über einen zweiten Übertragungskanal (K2) enthalten,
wobei die Transaktionsdaten über den zweiten Übertragungskanal (K2) von der Autorisierungseinrichtung (A) empfangen werden, und
wobei das Erzeugen der Daten durch die Autorisierungseinrichtung (A) ein Ermitteln von Hardwareeigenschaften des ersten oder des zweiten Endgerätes und ein Anpassen der Daten an die ermittelten Hardwareeigenschaften umfasst.

2. Verfahren nach Anspruch 1, wobei der zweite Autorisierungsvorgang (AV2) von der Autorisierungseinrichtung (A) abgeschlossen wird und einen Schritt zum Ermitteln einer zweiten Kennung (ID2) umfasst, wobei die zweite Kennung (ID2) jenem Endgerät (E2) zugeordnet ist, welches den zweiten Autorisierungsvorgang (AV2) initiiert, und wobei die zweite Kennung (ID2) jenes Endgerät (E2) identifiziert, welches den zweiten Autorisierungsvorgang (AV2) initiiert.

3. Verfahren nach Anspruch 1 oder 2, wobei der zweite Autorisierungsvorgang (AV2) einen Schritt zum Ermitteln einer Transaktionsberechtigung umfasst, wobei die Transaktionsberechtigung abhängig von der zweiten Kennung (ID2) ist.

4. Verfahren nach einem der Ansprüche 2 bis 3, wobei das Ermitteln der zweiten Kennung (ID2) eine Anfrage an eine Servereinrichtung und ein Empfangen der zweiten Kennung (ID2) von der Servereinrichtung umfasst, wobei die zweite Kennung (ID2) über den zweiten Übertragungskanal von der Autorisierungseinrichtung (A) empfangen wird.

5. Verfahren nach einem der vorhergehenden Ansprüche, wobei die Anweisung zur Initiierung des zweiten Autorisierungsvorganges (AV2) mindestens eine der folgenden Daten umfasst:
- Daten zum manuellen Erzeugen und Versenden einer Kurznachricht;
- Daten zum automatischen Erzeugen und Versenden einer Kurznachricht eines vorherbestimmten Inhaltes an eine vorherbestimmte Telefonnummer;
- Graphischer Code, in welchem die Daten für ein automatisches Erzeugen und Versenden einer Kurznachricht eines vorherbestimmten Inhaltes an eine vorherbestimmte Telefonnummer codiert sind.

6. Verfahren nach einem der vorhergehenden Ansprüche, wobei das Ermitteln der Hardwareeigenschaften ein Ermitteln der Hardwareeigenschaften der Anzeigeeinrichtung des ersten oder des zweiten Endgerätes umfasst, wobei das zweite Endgerät ein mobiles Endgerät ist, vorzugsweise ein mobiles Endgerät mit SMS-Funktionalität und Telefonie-Funktionalität.

7. Verfahren nach einem der vorhergehenden Ansprüche, wobei der erste Übertragungskanal (K1) ein WAP-Datenkanal oder ein IP-Datenkanal ist und wobei der zweite Übertragungskanal (K2) ein Mobilfunk-Kurznachrichtenkanal ist.

8. Verfahren nach einem der vorhergehenden Ansprüche, wobei die Transaktion an dem ersten Endgerät (E1) durchgeführt wird und wobei der Autorisierungsvorgang an dem zweiten Endgerät (E2) initiiert wird.

9. Autorisierungseinrichtung (A) zur Durchführung einer Autorisierung einer Internet-Transaktion, wobei ein erstes Endgerät (E1) und ein zweites Endgerät (E2) über ein Kommunikationsnetzwerk mit der Autorisierungseinrichtung (A) koppelbar sind, wobei die Transaktion an einem der beiden Endgeräte (E1, E2) durchführbar ist, wobei die Autorisierung an einem der beiden Endgeräte (E1, E2) initiierbar ist, und wobei die Autorisierungseinrichtung ausgestaltet ist ein Verfahren auszuführen, welches zumindest folgende Schritte umfasst:
- Durchführen eines ersten Autorisierungsvorganges (AV1), welcher umfasst:
- Empfangen von Transaktionsdaten von einem der beiden Endgeräte (E1, E2), wobei die Transaktionsdaten über einen ersten Übertragungskanal (K1) empfangen werden; und
- Ermitteln einer ersten Kennung (ID1), welche das eine Endgerät identifiziert; und
- wenn der erste Autorisierungsvorgang (AV1) zu einer Verweigerung der Durchführung der Transaktion aufgrund einer fehlgeschlagenen Ermittlung der ersten Kennung (ID 1) führt
- Erzeugen von Daten zur Übertragung auf eines der beiden Endgeräte (E1, E2), wobei die Daten die Transaktionsdaten und eine Anweisung zur Initiierung eines zweiten Autorisierungsvorganges (AV2) durch eines der beiden Endgeräte über einen zweiten Übertragungskanal (K2) enthalten, wobei die Transaktionsdaten über den zweiten Übertragungskanal (K2) von der Autorisierungseinrichtung (A) empfangen werden, und wobei das Erzeugen der Daten durch die Autorisierungseinrichtung (A) ein Ermitteln von Hardwareeigenschaften des ersten oder des zweiten Endgerätes und ein Anpassen der Daten an die ermittelten Hardwareeigenschaften umfasst.

10. Autorisierungseinrichtung nach Anspruch 9, wobei der zweite Autorisierungsvorgang (AV2) einen Schritt zum Ermitteln einer zweiten Kennung (ID2) umfasst, wobei die zweite Kennung (ID2) jenem Endgerät (E2) zugeordnet ist, welches den zweiten Autorisierungsvorgang (AV2) initiiert, und wobei die zweite Kennung (ID2) jenes Endgerät (E2) identifiziert, welches den zweiten Autorisierungsvorgang (AV2) initiiert.

11. Autorisierungseinrichtung nach Anspruch 9 oder 10, wobei der zweite Autorisierungsvorgang (AV2) einen Schritt zum Ermitteln einer Transaktionsberechtigung umfasst, wobei die Transaktionsberechtigung abhängig von der zweiten Kennung (ID2) ist.

12. Autorisierungseinrichtung nach einem der Ansprüche 9 bis 11, wobei das Ermitteln der zweiten Kennung (ID2) eine Anfrage an eine Servereinrichtung und ein Empfangen der zweiten Kennung (ID2) von der Servereinrichtung umfasst, wobei die zweite Kennung (ID2) über den zweiten Übertragungskanal von der Autorisierungseinrichtung (A) empfangen wird.

13. Autorisierungseinrichtung nach einem der Ansprüche 9 bis 12, wobei das Ermitteln der Hardwareeigenschaften ein Ermitteln der Hardwareeigenschaften der Anzeigeeinrichtung des ersten oder des zweiten Endgerätes umfasst, wobei das zweite Endgerät ein mobiles Endgerät ist, vorzugsweise ein mobiles Endgerät mit SMS-Funktionalität und Telefonie-Funktionalität.

14. Autorisierungseinrichtung nach einem der Ansprüche 9 bis 13, wobei der erste Übertragungskanal (K1) verschieden von dem zweiten Übertragungskanal (K2) ist, wobei der erste Übertragungskanal (K1) ein WAP-Datenkanal oder ein IP-Datenkanal ist und wobei der zweite Übertragungskanal (K2) ein Mobilfunk-Kurznachrichtenkanal ist.

## Claims

1. Method for carrying out an authorization of an internet transaction by an authorization device (A), whereby a first terminal (E1) and a second terminal (E2) are coupled with the authorization device (A) by a communication network, whereby the transaction can be carried out at one of the two terminals (E1, E2), whereby the authorization can be initiated at one of the two terminals (E1, E2), **characterized in that**, when a first authorization process (AV1) which comprises the steps
- reception of transaction data by an authorization device (A) from one of the two terminals (E1, E2), whereby the transaction data are received over a first transmission channel (K1) and
- detection by the authorization device (A) of a first identification (ID1)
which identifies the one terminal
leads to a refusal of the carrying out of the transaction because of an unsuccessful detection of the first identification (ID1), the authorization device (A) generates data because of the refusal for the transmission to one of the two terminals (E1, E2), whereby the data contain the transaction data and an instruction for the initiation of a second authorization (AV2) by one of the two terminals (E1, E2) over a second transmission channel (K2),
whereby the transaction data are received over the second transmission channel (K2) by the authorization device (A) and whereby the generation of the data by the authorization device (A) comprises a detection of hardware properties of the first or of the second terminal and an adaptation of the data to the detected hardware properties.

2. Method according to claim 1, whereby the second authorization process (AV2) is terminated by the authorization device (A) and comprises a step for the detection of a second identification (ID2), whereby the second identification (ID2) is assigned to the terminal (E2) which initiates the second authorization process (AV2) and whereby the second identification (ID2) identifies the terminal (E2) which initiates the second authorization process (AV2).

3. Method according to claim 1 or 2, whereby the second authorization process (AV2) comprises a step for the detection of a transaction authorization, whereby the transaction authorization depends on the second identification (ID2).

4. Method according to one of the claims 2 to 3, whereby the detection of the second identification (ID2) comprises a request to a server and a reception of the second identification (ID2) from the server, whereby the second identification (ID2) is received by the authorization device (A) over the second transmission channel.

5. Method according to one of the preceding claims, whereby the instruction to initiate the second authorization process (AV2) comprises at least one of the following data:
- data for the manual generation and sending of a short message,
- data for the automatic generation and sending of a short message of a predetermined content to a predetermined telephone number,
- graphic code in which the data for an automatic generation and sending of a short message of a predetermined content to a predetermined telephone number are encoded.

6. Method according to one of the preceding claims, whereby the detection of the hardware properties comprises a detection of the hardware properties of the display device of the first or of the second terminal, whereby the second terminal is a mobile terminal, preferably a mobile terminal with SMS-functionality and telephony functionality.

7. Method according to one of the preceding claims, whereby the first transmission channel (K1) is a WAP data channel or an IP data channel and whereby the second transmission channel (K2) is a radiotelephone short message channel.

8. Method according to one of the preceding claims, whereby the transaction is performed on the first terminal (E1) and whereby the authorization process is initiated on the second terminal (E2).

9. Authorization device (A) for carrying out an authorization of an internet transaction, whereby a first terminal (E1) and a second terminal (E2) are coupled with the authorization device (A) by a communication network, whereby the transaction can be carried out at one of the two terminals (E1, E2), whereby the authorization can be initiated at one of the two terminals (E1, E2) and whereby the authorization device is configured to carry out a method which comprises at least the following steps:
- carrying out of a first authorization process (AV1) which comprises:
- reception of transaction data by an authorization device (A) from one of the two terminals (E1, E2), whereby the transaction data are received over a first transmission channel (K1) and
- detection by the authorization device (A) of a first identification (ID1) which identifies the one terminal and
- when the first authorization process (AV1) leads to a refusal of the carrying out of the transaction because of an unsuccessful detection of the first identification (ID1)
- generation of data for the transmission to one of the two terminals (E1, E2), whereby the data contain the transaction data and an instruction for the initiation of a second authorization (AV2) by one of the two terminals (E1, E2) over a second transmission channel (K2),
whereby the transaction data are received over the second transmission channel (K2) by the authorization device (A) and whereby the generation of the data by the authorization device (A) comprises a detection of hardware properties of the first or of the second terminal and an adaptation of the data to the detected hardware properties.

10. Authorization device according to claim 9, whereby the second authorization process (AV2) is terminated by the authorization device (A) and comprises a step for the detection of a second identification (ID2), whereby the second identification (ID2) is assigned to the terminal (E2) which initiates the second authorization process (AV2) and whereby the second identification (ID2) identifies the terminal (E2) which initiates the second authorization process (AV2).

11. Authorization device according to claim 9 or 10, whereby the second authorization process (AV2) comprises a step for the detection of a transaction authorization, whereby the transaction authorization depends on the second identification (ID2).

12. Authorization device according to one of the claims 9 to 11, whereby the detection of the second identification (ID2) comprises a request to a server and a reception of the second identification (ID2) from the server, whereby the second identification (ID2) is received by the authorization device (A) over the second transmission channel.

13. Authorization device according to one of the claims 9 to 12, whereby the detection of the hardware properties comprises a detection of the hardware properties of the display device of the first or of the second terminal, whereby the second terminal is a mobile terminal, preferably a mobile terminal with SMS-functionality and telephony functionality.

14. Authorization device according to one of the claims 9 to 13, whereby the first transmission channel (K1) differs from the second transmission channel (K2), whereby the first transmission channel (K1) is a WAP data channel or an IP data channel and whereby the second transmission channel (K2) is a radiotelephone short message channel.

## Revendications

1. Procédé pour exécuter une autorisation d'une transaction internet par un dispositif d'autorisation (A), un premier terminal (E1) et un second terminal (E2) étant couplés au dispositif d'autorisation (A) par un réseau de communication, la transaction pouvant être exécutée sur l'un des deux terminaux (E1, E2), l'autorisation pouvant être initiée sur l'un des deux terminaux (E1, E2), **caractérisé en ce que**, lorsqu'un premier processus d'autorisation (AV1) qui comprend les étapes de
- réception de données de transaction par le dispositif d'autorisation (A) de l'un des deux terminaux (E1, E2), les données de transaction étant reçues par un premier canal de transmission (K1) et
- détection par le dispositif d'autorisation (A) d'une première identification (ID1) qui identifie l'un des terminaux,
conduit à un refus de l'exécution de la transaction en raison d'une détection de la première identification (ID1) qui a échoué,
le dispositif d'autorisation (A) génère, en raison du refus, des données pour la transmission à l'un des deux terminaux (E1, E2), les données contenant les données de transaction et une instruction pour l'initiation d'un second processus d'autorisation (AV2) par l'un des deux terminaux (E1, E2) par un second canal de transmission (K2),
les données de transaction étant reçues par le second canal de transmission (K2) par le dispositif d'autorisation (A) et la génération des données par le dispositif d'autorisation (A) comprenant une détection de propriétés du matériel du premier ou du second terminal et une adaptation des données aux propriétés du matériel détectées.

2. Procédé selon la revendication 1, le second processus d'autorisation (AV2) étant terminé par le dispositif d'autorisation (A) et comprenant une étape pour la détection d'une seconde identification (ID2), la seconde identification (ID2) étant affectée au terminal (E2) qui initie le second processus d'autorisation (AV2) et la seconde identification (ID2) identifiant le terminal (E2) qui initie le second processus d'autorisation (AV2).

3. Procédé selon la revendication 1 ou 2, le second processus d'autorisation (AV2) comprenant une étape pour la détection d'une autorisation de transaction, l'autorisation de transaction dépendant de la seconde identification (ID2).

4. Procédé selon l'une des revendications 2 à 3, la détection de la seconde identification (ID2) comprenant une demande à un serveur et une réception de la seconde identification (ID2) par le serveur, la seconde identification (ID2) étant reçue par le dispositif d'autorisation (A) par le second canal de transmission.

5. Procédé selon l'une des revendications précédentes, l'instruction pour l'initiation du second processus d'autorisation (AV2) comprenant au moins l'une des données suivantes :
- données pour la génération et l'envoi manuel d'un message court ;
- données pour la génération et l'envoi automatique d'un message court d'un contenu préalablement déterminé à un numéro de téléphone préalablement déterminé ;
- code graphique dans lequel les données pour une génération et un envoi automatique d'un message court d'un contenu préalablement déterminé à un numéro de téléphone préalablement déterminé sont codées.

6. Procédé selon l'une des revendications précédentes, la détection des propriétés du matériel comprenant une détection des propriétés du matériel du dispositif d'affichage du premier ou du second terminal, le second terminal étant un terminal mobile, de préférence un terminal mobile avec fonctionnalité de SMS et fonctionnalité de téléphonie.

7. Procédé selon l'une des revendications précédentes, le premier canal de transmission (K1) étant un canal de données WAP ou un canal de données IP et le second canal de transmission (K2) étant un canal de messages courts de radiocommunication mobile.

8. Procédé selon l'une des revendications précédentes, la transaction étant exécutée sur le premier terminal (E1) et le processus d'autorisation étant initié sur le second terminal (E2).

9. Dispositif d'autorisation (A) pour l'exécution d'une autorisation d'une transaction internet, un premier terminal (E1) et un second terminal (E2) pouvant être couplés au dispositif d'autorisation (A) par un réseau de communication, la transaction pouvant être exécutée sur l'un des deux terminaux (E1, E2), l'autorisation pouvant être initiée sur l'un des deux terminaux (E1, E2) et le dispositif d'autorisation étant configuré pour exécuter un procédé qui comprend au moins les étapes suivantes :
- exécution d'un premier processus d'autorisation (AV1) qui comprend :
- réception de données de transaction de l'un des deux terminaux (E1, E2), les données de transaction étant reçues par un premier canal de transmission (K1) et
- détection d'une première identification (ID1) qui identifie l'un des terminaux et
- lorsque le premier processus d'autorisation (AV1) conduit à un refus de l'exécution de la transaction en raison d'une détection de la première identification (ID1) qui a échoué,
- génération de données pour la transmission sur l'un des deux terminaux (E1, E2), les données contenant les données de transaction et une instruction pour l'initiation d'un second processus d'autorisation (AV2) par l'un des deux terminaux par un second canal de transmission (K2), les données de transaction étant reçues par le second canal de transmission (K2) par le dispositif d'autorisation (A) et la génération de données par le dispositif d'autorisation (A) comprenant une détection de propriétés de matériel du premier ou du second terminal et une adaptation des données aux propriétés de matériel détectées.

10. Dispositif d'autorisation selon la revendication 9, le second processus d'autorisation (AV2) comprenant une étape pour la détection d'une seconde identification (ID2), la seconde identification (ID2) étant affectée au terminal (E2) qui initie le second processus d'autorisation (AV2) et la seconde identification (ID2) identifiant le terminal (E2) qui initie le second processus d'autorisation (AV2).

11. Dispositif d'autorisation selon la revendication 9 ou 10, le second processus d'autorisation (AV2) comprenant une étape pour la détection d'une autorisation de transaction, l'autorisation de transaction dépendant de la seconde identification (ID2).

12. Dispositif d'autorisation selon l'une des revendications 9 à 11, la détection de la seconde identification (ID2) comprenant une demande à un serveur et une réception de la seconde identification (ID2) par le serveur, la seconde identification (ID2) étant reçue par le dispositif d'autorisation (A) par le second canal de transmission.

13. Dispositif d'autorisation selon l'une des revendications 9 à 12, la détection des propriétés du matériel comprenant une détection des propriétés du matériel du dispositif d'affichage du premier ou du second terminal, le second terminal étant un terminal mobile, de préférence un terminal mobile avec fonctionnalité de SMS et fonctionnalité de téléphonie.

14. Dispositif d'autorisation selon l'une des revendications 9 à 13, le premier canal de transmission (K1) étant différent du second canal de transmission (K2), le premier canal de transmission (K1) étant un canal de données WAP ou un canal de données IP et le second canal de transmission (K2) étant un canal de messages courts de radiocommunication mobile.
